# EUROPEAN PATENT SPECIFICATION

(11) **EP 2 274 099 B1**
(45) Date of publication and mention of the grant of the patent: **17.07.2019**
(21) Application number: 09724984.1
(22) Date of filing: 27.03.2009
(51) Int. Cl.: B01L 3/02, G01N 35/10, G01N 1/02

(54) **SAMPLE PREPARATION DEVICES AND METHODS FOR PROCESSING ANALYTES**
PROBENVORBEREITUNGSVORRICHTUNGEN UND VERFAHREN ZUR VERARBEITUNG VON ANALYTEN
DISPOSITIFS DE PRÉPARATION D ÉCHANTILLONS ET PROCÉDÉS DE TRAITEMENT D ANALYTES

(30) Priority: 11.11.2008 US 113522; 28.03.2008 US 40541
(43) Date of publication of application: 19.01.2011
(73) Proprietor: Biotix Inc, San Diego, CA 92121 (US)
(72) Inventor: MOTADEL, Arta, San Diego California 92121 (US); PRESCHUTTI, Stanley, Los Angeles California 90038 (US)
(74) Representative: Vossius & Partner Patentanwälte Rechtsanwälte mbB
(86) International application number: PCT/US2009/038686
(87) International publication number: WO 2009/121032

(56) References cited:
- WO-A1-88/09201
- WO-A1-2007/029616
- DE-C1- 19 806 780
- JP-A- 2003 251 122
- JP-A- 2004 237 142
- JP-T- 2000 515 066
- US-A- 5 395 521
- US-A1- 2003 178 370
- US-A1- 2004 142 488

## Description

### Field of the Invention

The present invention relates in part to sample preparation devices that can be utilized to process analytes.

### Background

Pipette tips are hollow tubes approximating a conical shape with openings at the upper and lower ends, often manufactured from an inert polymer material, and usually used to acquire, transport or dispense fluids. These fluids may or may not contain an analyte. Pipette tips are made in a number of sizes to allow accurate and reproducible liquid handling for volumes ranging from nanoliters to milliliters.

Pipette tips are used in conjunction with a pipette or pipettor. A pipettor is a device that, when attached to the upper end of a pipette tip (the larger opening end), applies negative pressure to acquire fluids, and applies positive pressure to dispense fluids. The lower or distal portion of a pipettor (typically referred to as the barrel) is placed in contact with the upper end of the pipette tip and held in place by pressing the barrel of the pipette into the upper end of the pipette tip. The combination then can be used to manipulate liquid samples via the application of negative pressure generated by the pipettor. Pipettors are available for manual or automated pipetting (e.g., automated pipetting by a robotic device). Pipette tips designed to reduce sample cross contamination, via the addition of various porous filters, are utilized in laboratories in manual and automated pipetting formats for carrying out such procedures as high throughput assays, for example.

Analytes can be isolated, purified or concentrated using a number of common laboratory techniques. Some methods make use of affinity or non-affinity binding on solid phase supports. Certain methods separate the analyte of interest from other analytes considered contaminants by reversibly binding and retaining the analytes of interest. Analytes can also be isolated, purified or concentrated using various types of chromatography. There are numerous methods of chromatography, examples of which include Ion exchange chromatography, affinity chromatography, High Pressure Liquid Chromatography (HPLC), Fast Protein Liquid Chromatography (FPLC) and chromatography using solid supports with or without coated and/or charged surfaces. These chromatographic methods can be performed on a large scale or in small volumes depending on the sample. Chromatography kits are commercially available which allow the processing of relatively small sample volumes, and which involve centrifugation of a sample, which passes the sample through the chromatographic matrix, followed by elution of the material of interest from the chromatographic matrix, also in conjunction with centrifugation. This method is rapid, relatively inexpensive and provides reasonable recovery of the analyte of interest.

WO 88/09201 A1 refers to a device for separating and cleaning molecules by adsorption of the molecules on a matrix, where a solution is forced through the device. It is described that the matrix is arranged between two devices permeable to the solution in a hollow frustum-shaped body open at both ends, the wider opening being connected, if necessary, to a cylindrical hollow body.

US 2003/0178370 A1 refers to a solid phase extraction (SPE) device having a reservoir with an opening; a well comprising an internally tapered wall, the wall having a wider interior diameter at an end closest to the opening than at an exit spout; a first filter placed within the well; a bed of sorbent particles placed within the well below the first filter; and a second filter having a diameter smaller than the first filter placed within the well below the bed of sorbent particles and above the exit spout.

US 5,395,521 A refers to a method and an apparatus for automatic chromatographic column operations, including column equilibration, column loading, column washing, and column elution. A novel pipette tip column is described to be packed with a binding material sandwiched between two permeable spheres.

DE 198 06 780 C1 refers to an apparatus to isolate and purify nucleic acids which includes a holder zone for an adsorption agent. It is described that a passage has a connection opening for connection to a piston pipette assembly, and an outlet opening. It is further described that a second passage has a suction and outlet opening. Furthermore, it is described that an adsorption agent is between the outlet openings, and between upper and lower filters. A further filter is described to be near the connection opening.

US 2004/0142488 A1 refers to extraction columns for the purification of an analyte (e.g., a biological macromolecule, such as a peptide, protein or nucleic acid) from a sample solution. The columns are described to typically include a bed of extraction media positioned in the column between two frits.

WO 2007/029616 A1 refers to a various substances supporter by which multiple particulate carriers to which various substances are fixed or fixable can be identified from each other without the need to arrange in predetermined position and sequence to thereby attain processing speedup and facilitation through saving of time for arranging of various substances in predetermined position and sequence.

### Summary

The invention is defined by the features of the independent claims.

Provided herein are liquid handling and sample preparation devices useful for isolation, purification, concentration and/or fractionation of analytes, such as nucleic acids and polypeptides, for example. Such devices include solid phase supports that bind to analytes by specific or non-specific interactions. The solid supports in some embodiments are sintered supports or fiber supports, which may be coated or uncoated with certain materials. The solid phase supports are incorporated into a disposable pipette tip or manufactured as a pipette tip extension constructed from a thermoplastic or polymer, in certain embodiments. In some embodiments, solid phase supports are incorporated into laboratory liquid handling tubes and specimen containers. In certain embodiments, solid phase supports can be incorporated in a microfluidic device.

Thus, featured in part herein is a polymer pipette tip device, which comprises: a continuous and tapered polymer wall defining a first void and a second void located at opposite termini, where the cross section of the first void and the cross section of the second void are substantially circular and substantially parallel, and the diameter of the first void is less than the diameter of the second void;
and an insert in contact with a portion of the inner surface of the polymer wall between the first void and second void, where the insert comprises (i) a sintered solid support with voids, or (ii) a multi-fiber solid support with voids between adjacent fibers, and where surfaces defining the voids interact with an analyte under analyte interaction conditions. In certain embodiments, the polymer pipette tip device comprises one or more protrusions coextensive with the inner surface of the wall, where at least a portion of the protrusion is in contact with the insert. In related embodiments, the polymer pipette tip device comprises an annular protrusion coextensive with the inner surface of the wall, where the cross section of the annular protrusion is substantially parallel to the cross section of the first void and the second void, where the wall and the annular protrusion are constructed from the same polymer, and where at least a portion of the annular protrusion is in contact with the insert.

The invention also in part provides a polymer pipette tip device, which comprises: a continuous and tapered first wall defining a first void and a second void located at opposite termini, where the cross section of the first void and the cross section of the second void are substantially circular and substantially parallel, and the diameter of the first void is greater than the diameter of the second void; a continuous and tapered second wall defining the second void and a third void located at opposite termini, where the cross section of the second void and the cross section of the third void are substantially circular and substantially parallel, and the diameter of the second void is greater than the diameter of the third void, and where the second wall is coextensive with the first wall and the first wall and second wall are constructed from the same polymer, and where the taper angle of the second wall is less than the taper angle of the first wall; and an insert in contact with a portion of the inner surface of the second wall between the second void and the third void, where the insert comprises (i) a sintered solid support with voids, or (ii) a multi-fiber solid support with voids between adjacent fibers, and where surfaces defining the voids interact with an analyte under analyte interaction conditions. In certain embodiments, the polymer pipette tip device comprises one or more protrusions coextensive with the inner surface of the second wall, where at least a portion of the protrusion is in contact with the insert. In related embodiments, the polymer pipette tip device comprises an annular protrusion coextensive with the inner surface of the second wall, where the cross section of the annular protrusion is substantially parallel to the cross section of the first void and the second void, where the wall and the annular protrusion are constructed from the same polymer, and where at least a portion of the annular protrusion is in contact with the insert.

Also provided herein is a polymer pipette tip extension device, which comprises: a polymer housing comprising an outer surface and inner surface that defines a first void and a second void located at opposite termini of the housing, where: the cross section of the first void and the cross section of the second void are substantially circular and substantially parallel, the diameter of the first void is greater than the diameter of the second void, and the diameter of the first void and a portion of the housing contiguous with the first void are adapted to fit over the fluid delivery terminus of a pipette tip; and an insert in contact with a portion of the inner surface of the housing, where the insert comprises (i) a sintered solid support with voids, or (ii) a multi-fiber solid support with voids between adjacent fibers, and where surfaces defining the voids interact with an analyte under analyte interaction conditions. In certain embodiments, the polymer pipette tip extension device comprises one or more protrusions coextensive with the inner surface of the housing wall, where at least a portion of the one or more protrusions is in contact with a portion of the insert. In related embodiments, the extension device comprises an annular protrusion coextensive with the inner surface of the housing wall, where at least a portion of the annular protrusion is in contact with a portion of the insert.

In certain embodiments, the insert fibers of a pipette tip device or pipette tip extension device are optic fibers, glass fibers or polymer fibers. The fibers can be arranged in a multi-fiber bundle or array in some embodiments. In certain embodiments, the volume of the pipette tip or pipette tip extension device ranges from 0 to 10 microliters, 0 to 20 microliters, 1 to 100 microliters, 1 to 200 microliters or from 1 to 1000 microliters. In certain embodiments, pipette tip devices can deliver nanoliter (1 to 999 nanoliters) or picoliter (1 to 999 picoliters) volumes.

There is also disclosed a method for attaching a pipette tip extension device to a pipette tip, comprising: contacting the portion of the housing contiguous with the first void of the pipette tip extension device described herein with the fluid delivery terminus of a pipette tip, applying pressure between the pipette tip and the pipette tip extension device, and optionally twisting and the pipette tip extension device with reference to the pipette tip; whereby the pipette tip extension device housing is seated onto the fluid dispensing portion of the pipette tip. In certain embodiments, the pipette tip extension device is contacted with a fluid comprising an analyte.

Provided also herein is a laboratory fluid handling container device comprising: a body and a lid, and an insert affixed to an inner surface of the body, where the insert comprises (i) a sintered solid support with voids, or (ii) a multi-fiber solid support with voids between adjacent fibers, and where
surfaces defining the voids interact with an analyte under analyte interaction conditions. The invention also in part provides a laboratory fluid handling container device, comprising: a body and a lid, and an insert affixed to an inner surface of the lid, where the insert comprises (i) a sintered solid support with voids, or (ii) a multi-fiber solid support with voids between adjacent fibers, and where surfaces defining the voids interact with an analyte under analyte interaction conditions. In some embodiments, the container is a microcentrifuge tube, such as a microcentrifuge tube having a volume of up to about 250 microliters, 500 microliters, 1.5 milliliters or 2.0 milliliters, for example. In certain embodiments, the container is a specimen container, such as a container that can contain a volume of up to about 15 milliliters 20 milliliters, 4 ounces, 4.5 ounces, 5 ounces, 7 ounces, 8 ounces or 9 ounces, for example. In some embodiments, the device comprises a thermoplastic or polymer, where sometimes the lid or body is manufactured with an additional boss of thermoplastic or polymer, and where the additional thermoplastic or polymer boss is melted or partially melted to the insert in certain embodiments. In some embodiments, the insert is affixed by an adhesive, such as a chemically and/or biologically inert adhesive, for example. In certain embodiments, insert fibers in the laboratory fluid handling container device are optic fibers, glass fibers or polymer fibers, and sometimes the fibers are arranged in a multi-fiber bundle or array.

There is also disclosed a microfluidic device comprising one or more inserts in fluid communication with a capillary flow channel, where the insert comprises (i) a sintered solid support with voids, or (ii) a multi-fiber solid support with voids between adjacent fibers, and where surfaces defining the voids interact with an analyte under analyte interaction conditions. Insert fibers in such microfluidic devices sometimes are optic fibers, glass fibers or polymer fibers, and in certain embodiments, the fibers are arranged in a multi-fiber bundle or array.

Also featured in part herein is a polymer pipette tip device, which comprises: a continuous and tapered polymer wall defining a first void and a second void located at opposite termini, where the cross section of the first void and the cross section of the second void are substantially circular and substantially parallel, and the diameter of the first void is less than the diameter of the second void; a first plug and a second plug, where the first plug and second plug are constructed from a porous material; and beads located within the interior of the pipette tip device between the first plug and the second plug, where the first plug and second plug are in contact with the inner surface of the wall and contain the beads within the pipette tip device, and where the beads interact with an analyte under analyte interaction conditions.

Provided also herein is a polymer pipette tip device, which comprises: a continuous and tapered first wall defining a first void and a second void located at opposite termini, where the cross section of the first void and the cross section of the second void are substantially circular and substantially parallel, and the diameter of the first void is greater than the diameter of the second void; a continuous and tapered second wall defining the second void and a third void located at opposite termini, where the cross section of the second void and the cross section of the third void are substantially circular and substantially parallel, and the diameter of the second void is greater than the diameter of the third void, and where the second wall is coextensive with the first wall and the first wall and second wall are constructed from the same polymer, and where the taper angle of the second wall is less than the taper angle of the first wall; a first plug and a second plug in contact with the inner surface of the wall, where the first plug and second plug are constructed from a porous material; and beads located within the interior of the pipette tip device between the first plug and the second plug, where the beads interact with an analyte under analyte interaction conditions.

Also provided herein is a polymer pipette tip device, which comprises: a continuous and tapered polymer wall defining a first void and a second void located at opposite termini, where the first void is a slot and the cross section of the second void is substantially circular; a plug constructed from a porous material; and beads located within the interior of the pipette tip device between the first plug and the slot, where the plug is in contact with the inner surface of the wall, the slot width is less than the bead diameter, and the slot and the plug contain the beads within the pipette tip device, and where the beads interact with an analyte under analyte interaction conditions.

The invention also in part provides a polymer pipette tip device, which comprises: a continuous and tapered first wall defining a first void and a second void located at opposite termini, where the cross section of the first void and the cross section of the second void are substantially circular and substantially parallel, and the diameter of the first void is greater than the diameter of the second void; a continuous and tapered second wall defining the second void and a third void located at opposite termini, where the third void is a slot, where the second wall is coextensive with the first wall and the first wall and second wall are constructed from the same polymer, and where the taper angle of the second wall is less than the taper angle of the first wall; a plug constructed from a porous material; and beads located within the interior of the pipette tip device between the first plug and the slot, where the plug are is in contact with the inner surface of the first wall or second wall, the slot width is less than the bead diameter, and the slot and the plug contain the beads within the pipette tip device, and where the beads interact with an analyte under analyte interaction conditions.

In certain embodiments, the beads are silica gel, glass (e.g. controlled-pore glass (CPG), silica beads or particles), nylon, Sephadex®, Sepharose®, cellulose, a metal surface (e.g. steel, gold, silver, aluminum, silicon and copper), a magnetic material, a plastic material (e.g., polyethylene, polypropylene, polyamide, polyester, polyvinylidenedifluoride (PVDF)), Wang resin, Merrifield resin or Dynabeads®. Also provided is a method for manufacturing a polymer pipette tip device containing beads and at least two plugs, comprising: inserting a first plug into a pipette tip to a determined position, filling the pipette tip with determined amount of beads, and inserting a second plug into the pipette tip, where the beads are located between the first plug and the second plug. Such a method optionally can include applying a slight downward pressure on the second plug. Provided also is a method for manufacturing a polymer pipette tip device containing beads, a single plug and a slot-shaped fluid delivery terminus comprising: filling the pipette tip with determined amount of beads, and inserting a plug into the pipette tip, where the beads are located between the plug and the slot. Such a method optionally can include applying a slight downward pressure on the second plug.

In the devices described herein, the analyte can be a nucleic acid, peptide, polypeptide or cell in certain embodiments, and the insert or beads may be associated (e.g., reversibly associated) with an analyte. The invention also in part features a method for associating an analyte with a device described herein, which comprises: contacting an analyte with the insert of the device under conditions in which the analyte associates with the insert. Also provided is a method for isolating an analyte using a device described herein, which comprises: contacting an analyte with a device described herein under conditions in which the analyte associates with the insert or beads; optionally exposing the insert or beads to conditions that selectively remove any non-analyte components associated with the insert or beads; and exposing the insert or beads to conditions that elute the analyte from the insert.

Provided also herein is a polymer pipette tip device, which comprises fibers arranged in fin structures amassed in a fin array. A "fin array" as used herein refers to a multi-fin bundle in which the fins are extended from one end of the insert to the other and are substantially parallel to the longitudinal axis of the insert. An array can contain any useful number of fins for preparing molecular samples, and in some embodiments, an array has about 2 to about 10,000 fins or about 10 to about 1000 fins, and sometimes about 2, 10, 50, 100, 200, 300, 400, 500, 600, 700, 800, 900, 1000, 2000, 3000, 4000, 5000, 6000, 7000, 8000, 9000 or 1000 fins. The fins often are aligned in a planar or substantially flat orientation with respect to one another, for example. The fins may be arranged in a radial symmetry, checked or sigmoidal pattern, in certain embodiments. The fins' cross section is about 0.001 to about 0.010 millimeters thick, or about 0.010 to about 0.050 millimeters thick, or about 0.050 to about 0.10 millimeters thick, in some embodiments. The length of the fins is about 1.0 to about 2.0 millimeters long, about 2.0 to about 3.5 millimeters long, or about 3.5 to about 5.0 millimeters long, in certain embodiments. The surface area of the fins is about 0.01 to about 1.5 square millimeters, about 1.5 to about 3.5 square millimeters, or about 3.5 to about 5.0 square millimeters, in some embodiments.

In certain embodiments, the fins are surrounded by an exterior shell. The exterior shell cross section is about 0.01 to about 0.10 millimeters thick, about 0.10 to about 0.50 millimeters thick, or about 0.50 to about 1.0 millimeters thick, in certain embodiments. The exterior shell may be made from glass or polymer in some embodiments. The exterior shell may be melted into the sides of the pipette tip or affixed to the pipette tip by an adhesive wherein the adhesive is chemically and/or biologically inert.

Provided also herein is a polymer pipette tip device, which comprises an insert with fins, where the insert is associated with an analyte. The analyte may be a nucleic acid, peptide, polypeptide or cell. The analyte may be reversibly associated with the insert.

Also provided herein is a method for associating an analyte with a device of any one of the aforementioned embodiments, which comprises contacting an analyte with the insert of the device under conditions in which the analyte associates with the insert. The insert of the device may be used to extract nucleic acid (e.g., DNA, RNA) or protein from a sample.

Also provided herein a method for isolating an analyte using a device of any one of the aforementioned embodiments, which comprises contacting an analyte with a device described herein under conditions in which the analyte associates with the insert; optionally exposing the insert to conditions that remove any non-analyte components associated with the insert, but do not substantially remove analyte from the insert; and exposing the insert to conditions that elute the analyte from the insert.

Also provided is a pipette tip comprising a first terminal void and a second terminal void and a filter insert, where (i) the cross sectional area of the first terminal void is smaller than the cross sectional area of the second terminal void; (ii) the filter insert, or a portion thereof, is located in the pipette tip interior; and (iii) the terminus of the filter insert closest to the first terminal void is located at substantially the same location as the first terminal void, or is near the first terminal void. In certain embodiments the terminus of the filter insert closest to the first terminal void is within about 0 to about 5 millimeters of the first terminal void. The terminus of the filter insert is located outside the pipette tip in certain embodiments, and sometimes the filter insert in its entirety, including the terminus of the filter insert closest to the first terminal void, is located in the pipette tip interior. In some embodiments the pipette tip further comprises a second insert, such as an insert described herein that interacts with an analyte, located in the pipette tip interior closer to the second terminal void than the filter insert. In certain embodiments, the second insert comprises beads and/or fibers.

Certain aspects of embodiments of the invention are described in the following brief description of the drawings, detailed description, examples and claims.

### Brief Description of the Drawings

The drawings illustrate embodiments of the invention and are not limiting. It should be noted that for clarity and ease of illustration, these drawings are not made to scale and that in some instances various embodiments of the invention may be shown exaggerated or enlarged to facilitate an understanding of particular embodiments.

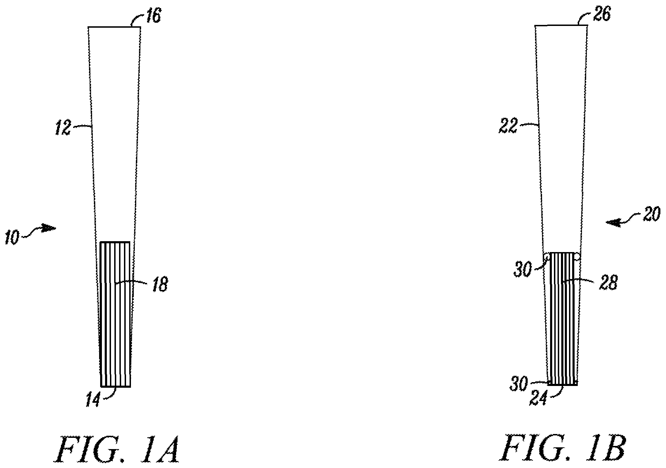

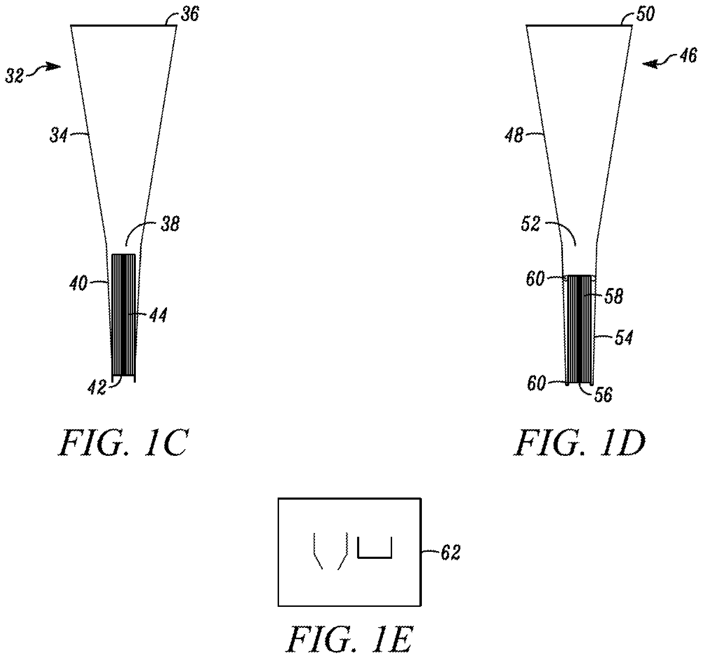

Figs. 1A and 1C show views of assembled pipette tip device embodiments containing a compression fit insert plug. Figs. 1B and 1D show vertical views of assembled pipette tip device embodiments containing an insert plug fitted to the pipette tip having sealing rings. Fig. 1E shows alternative vertical cross-sectional views of distal pipette tip end configurations usable with certain pipette tip device embodiments.

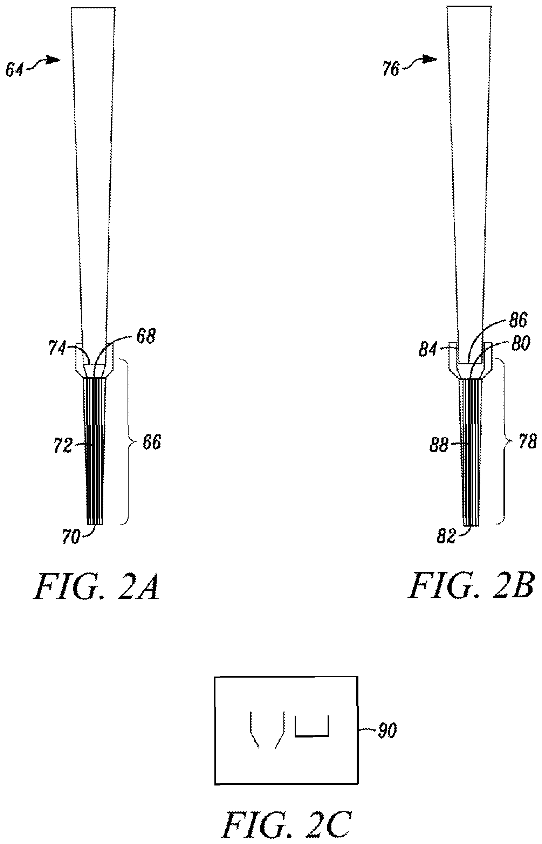

Figs. 2A and 2B show vertical views of a pipette tip device embodiment having a universal tip extender, which can be used to convert a standard pipette tip into a pipette tip device as described in embodiments presented herein. Fig. 2A shows a universal tip extender embodiment configured for compression fitting to the pipette tip. Fig. 2B shows a universal tip extender embodiment configured for fitting using sealing rings. Fig. 2C shows possible distal pipette tip configurations that can fit into the receiving end of a universal tip extender embodiment.

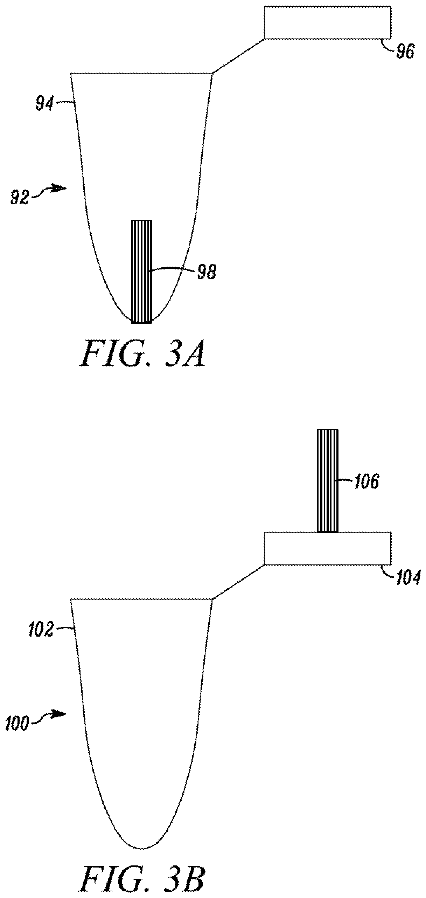

Figs. 3A and 3B show vertical cross-sectional views of a laboratory liquid handling tube embodiment. Fig. 3A shows a laboratory liquid handling tube embodiment with an insert plug in contact with the body of the tube. Fig. 3B shows a laboratory liquid handling tube embodiment with an insert plug in contact with the lid of the tube.

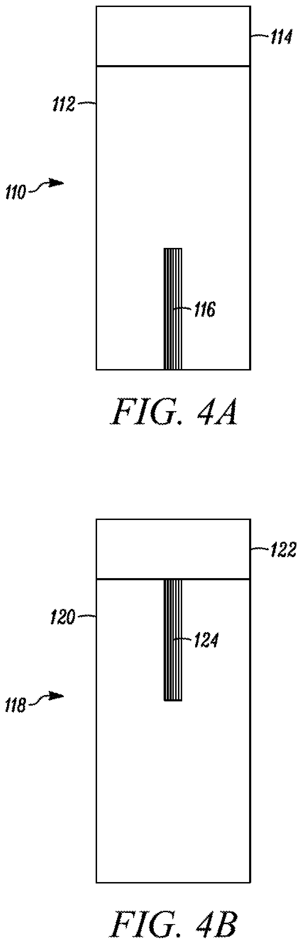

Figs. 4A and 4B show vertical cross-sectional views of a specimen container embodiment. Fig. 4A shows a specimen container embodiment with an insert plug in contact with the body of the container. Fig. 4B shows a specimen container embodiment with an insert plug in contact with the lid of the container.

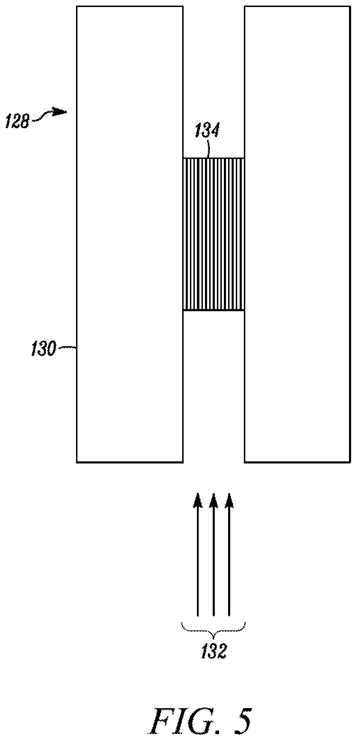

Fig. 5 is a block diagram of a generic microfluidic device embodiment containing an insert plug useful for isolation, purification or concentration and/or fractionation of analytes of interest, where the insert plug is in effective fluid communication with the biological sample material flowing through the microfluidic device. Non-limiting examples of microfluidic devices that can be modified with the insert plugs described herein are described in U.S. Patent 6,168,948 to Andersen et al. or U.S. Patent 6,638,482 to Ackley et al.

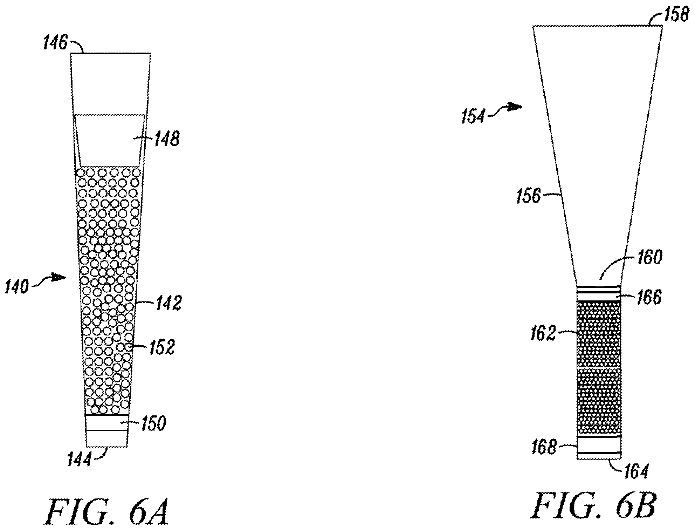

Figs. 6A and 6B show vertical views of a polymer pipette tip device embodiment containing two plugs made from a porous water immiscible material and beads, useful for isolation, purification or concentration and/or fractionation of analytes of interest, disposed between the two plugs.

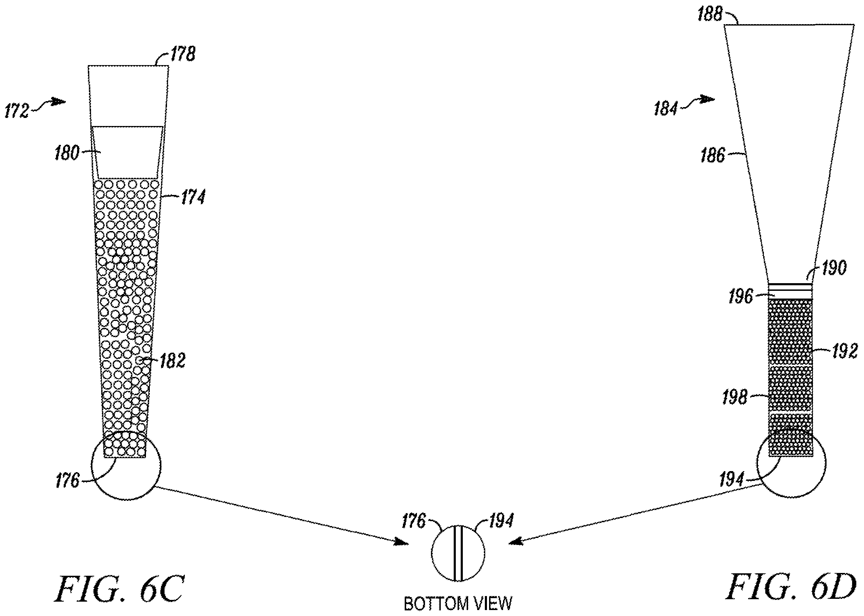

Figs. 6C and 6D show vertical views of a polymer pipette tip device embodiment containing a single plug, made from a porous water immiscible material, and beads useful for isolation, purification or concentration and/or fractionation of analytes of interest. The beads are disposed below the level of the plug and are held in place within the polymer pipette tip device embodiment by the distal end of the pipette tip, which is configured to have a smaller opening than the diameter of the beads contained within the polymer pipette tip device.

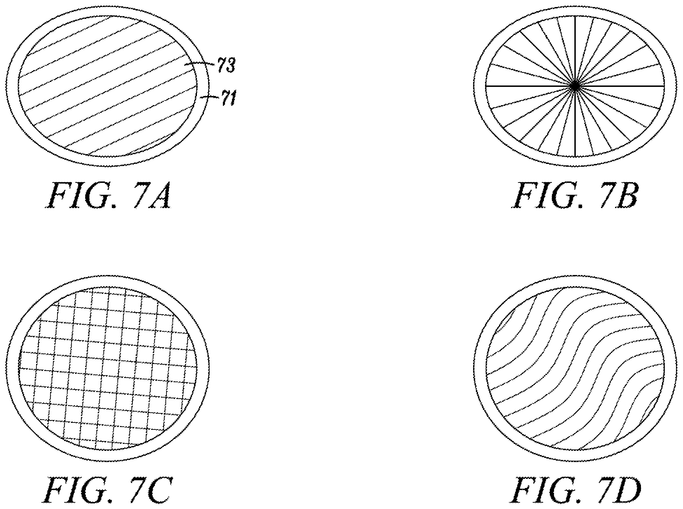

Figs. 7A-7D show horizontal cross sectional views of pipette tip device embodiments containing compression fit insert plugs with an exterior shell.

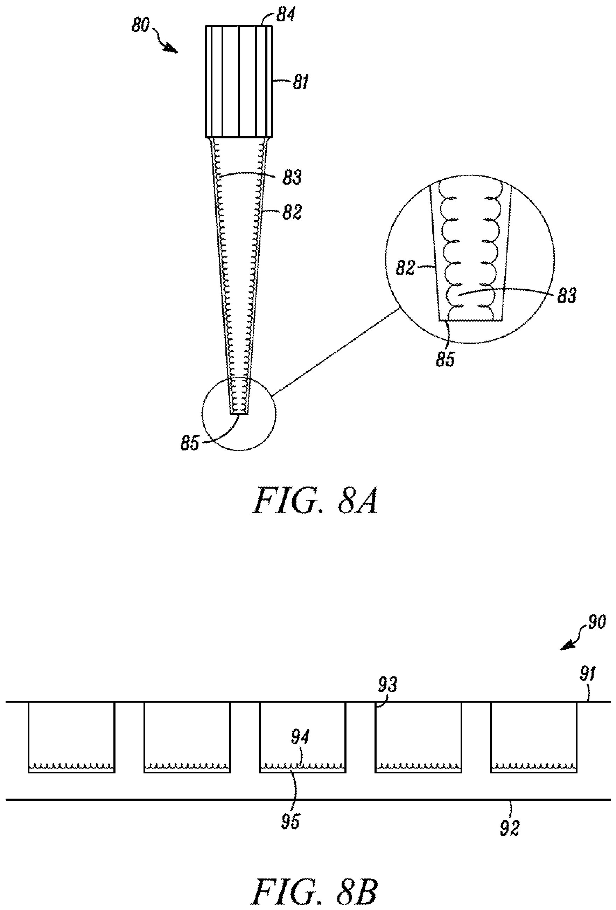

Figs. 8A and 8B show vertical sectional views of pipette tip device embodiments and microwell plate embodiments comprising an irregular surface.

### Detailed Description

Polymer pipette tip devices, laboratory fluid handling tubes, specimen containers, and microfluidic devices described herein are useful for the isolation, purification, concentration and/or fractionation of analytes of interest from a variety of samples. Certain devices combine and provide the benefits of chromatography, isolation, purification, concentration and or fractionation without using centrifugation. Devices described herein can be utilized in manual or automated/robotic applications in volumes ranging from sub-microliter (e.g., nanoliter) to milliliter volumes. Certain devices have the additional benefit of being readily applicable to a variety of methodologies, including pipette tip-based isolation, purification and concentration and/or fractionation of analytes for ease of use and reduced cost.

Sample preparation devices provided herein are cost-effective, adaptable to many protocols, are not reliant on conventional chromatographic matricies, and do not require the use of centrifugation or other specialized equipment that can affect the quality of the material recovered. Thus, the sample preparation devices described herein are useful for isolation, purification, concentration and/or fractionation of analytes with improved sample recovery and improved sample quality.

In certain methods and devices used by the person of ordinary skill in the art, recovered analyte material may be damaged (e.g., nicked or sheared in the case of nucleic acids, denatured or incorrectly folded in the case of proteins) due to the mechanical forces exerted (e.g., heat transfer, acute centrifugal force, and air resistance). For example, an analyte may be structurally altered by the combination of centrifugation and the forced passage of the analyte through tortuous pathways formed by the chromatographic matrix, and/or by the methods necessary to elute the material of interest from the matrix to which it was bound. Therefore the impaired quality of the resultant biological samples extracted using certain methods may be undesirable to the user.

The structure of analytes prepared using devices described herein often remain unaltered or less altered as compared to techniques in use by the person of ordinary skill in the art, and processes and devices described herein do not substantially modify the structures of the prepared analytes. For example, samples prepared using the sample preparation devices provided herein minimize nicking and shearing of nucleic acids resulting in greater recovery of intact nucleic acids, including chromatin, genomic DNA, and nucleic acids with certain secondary and tertiary structural conformations. In general, nucleic acids isolated by the sample preparation devices herein, will have a greater structural integrity for subsequent analysis. Additionally, use of the sample preparation devices provided herein will result in a greater yield of intact polypeptides and proteins with correct folding and intact structural integrity, also due to the advantages of using non-centrifugal means to isolate, purify, concentrate and/or fractionate the polypeptides or proteins.

Sample preparation devices provided herein are useful for efficient recovery of an analyte in a sample. In some embodiments, a sample preparation device provided herein may be used to recover about 30%, 40%, 50%, 60%, 70%, 80%, 90%, or more of an analyte recoverable from a sample. One of skill in the art will be aware of the need to balance the starting materials with the size of the sample preparation device for optimal recovery of the analyte of interest. To provide a wider range of options for the person of ordinary skill in the art, the sample preparation devices provided herein are configured in a number of different sizes to allow recovery of the material of interest from a wide range of starting materials and samples.

### Pipette Tip Devices

Pipette tips typically are used to acquire, transport or dispense fluids in various laboratory settings. Pipette tips can be used in large quantities in both medical and research settings where handling of large numbers of biological samples is necessary. Pipette tips can be used manually, where an operator uses either a single channel pipette or a multichannel pipette (more than one dispensing outlet, typically available in 2, 4 or 8 channel configurations), or pipette tips can also be used in automated or robotic applications. In these automated or robotic applications, the robotic devices can be configured to also use 1, 2, 4, 8, 16, 24, 32, 40, 48, 56, 64, 72, 80, 88, 96, 384 or 1536 channel pipettes. Pipettes with 96 or more channels generally are used in microtiter plate or array/chip applications where high throughput analysis of a large number of samples is required, for instance, in laboratories or medical clinics where PCR, DNA chip technology, protein chip technology (chip technology is also known as arrays), immunological assays (ELISA, RIA), or other large number of samples must be processed in a timely manner. One example of an automated or robotic device used for high throughput analysis is a device referred to as the Oasis LM (produced by Telechem International, Inc. Sunnyvale California 94089). This computer-driven biological workstation can be configured with up to 4 separate pipette tip heads with the ability to pipette 1, 8, 96, 384 or 1536 samples. The range of volumes is dependent on the particular head and pipette tip combination, and the volume range for the workstation is from 200 nanoliters to 1 milliliter. The workstation can operate all four pipette heads simultaneously.

Pipette tips typically are available in sizes that hold from 0 to 10 microliters, 0 to 20 microliters, 1 to 100 microliters, 1 to 200 microliters and from 1 to 1000 microliters While the external appearance of pipette tips may be different, pipette tips suitable for use with the embodiments presented herein generally have a continuous tapered wall forming a central channel or tube that is roughly circular in horizontal cross section. However, any cross-sectional geometry can be used providing the resultant pipette tip device provides suitable flow characteristics, and can be fitted to a pipette. Pipette tips useable with the embodiments described herein will taper from the widest point at the top-most portion of the pipette tip (pipette proximal end or end that fits onto pipette), to a narrow opening at the bottom most portion of the pipette tip (pipette distal or end used to acquire or dispel samples). In certain embodiments, a pipette tip wall can have two or more taper angles. While the inner surface of the pipette tip often forms a tapered continuous wall, the external wall may assume any appearance ranging from an identical continuous taper to a stepped taper or a combination of smooth taper with external protrusions. The upper-most outer surface of commonly available pipette tips often are designed to aid in pipette tip release by the presence of thicker walls or protrusions that interact with a pipette tip release mechanism found in many commercially available pipette devices. Additional advantages of the externally stepped taper are compatibility with pipette tip racks from any manufacturer. The thicker top-most portion of certain pipette tips also allows for additional rigidity and support such that additional pressure can be applied when pressing the pipette into the opening of the pipette tip to secure the pipette tip on the pipette, thus ensuring a suitable seal. The bore of the top-most portion of the central channel or tube will be large enough to accept the barrel of a pipette apparatus of appropriate size. As most pipette apparatus are capable of being used with universal pipette tips made by third party manufacturers, one of skill in the art would be aware of the different pipette tip sizes used with pipettes of different volumetric ranges. Therefore one of skill in the art appreciates that a pipette tip designed for use with a pipette used for handling samples of 1 to 10 microliters generally would not fit on a pipette designed for handling samples of up to 1000 microliters. The design and manufacture of standard pipettes and pipette tips is well known in the art, and injection molding techniques often are utilized.

The term "pipette tip device" as used herein refers to a pipette tip suitable for isolation, purification, concentration and/or fractionation of biological samples, where the device often is constructed of standard, commercially available pipette tips of any size or shape into which an insert can be inserted. The pipette tip housing often is manufactured from a polymer, which can be of any convenient polymer type or mixture for fluid handling (e.g., polypropylene, polystyrene, polyethylene, polycarbonate). A pipette tip device can be provided as a RNase, DNase, and/or protease free product, and can be provided with one or more filter barriers. Filter barriers are useful for preventing or reducing the likelihood of contamination arising from liquid handling, and sometimes are located near the pipette tip terminus that engages a manual or robotic pipettor in certain embodiments.

An "insert" as used herein often comprises a solid phase that can interact with an analyte. The term "solid support" or "solid phase" as used herein refers to an insoluble material with which an analyte can be associated, directly or indirectly.

An insert in certain embodiments is a fiber or multi-fiber insert. Multi-fiber inserts can also be referred to as multi-fiber bundles. Optic fibers, glass fibers and polymer fibers (e.g., charged or uncharged polymers) are non-limiting examples of types of fibers that can be utilized. Published U.S. Patent Application Publication No. 2006/0201881, published September 14, 2006, entitled "Capillary-channeled polymeric fiber as solid phase extraction media," to Marcus et al. shows that polypropylene fibers can be used as a solid phase, for example. Thus, any suitable polymer fibers can be used in inserts. Fibers can also be etched, channeled, charged, sintered, or combinations thereof.

Fiber bundles are known to the person of ordinary skill in the art. Examples of fiber bundles are described in U.S. Patent No. 5,851,491, issued on December 22, 1998, entitled "Pipette tip and filter for accurate sampling and prevention of contamination," to Moulton; in U.S. patent No. 5,460,781, issued October 24, 1995, entitled "Hemoglobin sampler," to Hori et al.; in U.S. Patent No. 4,657,742, issued on April 14, 1987, entitled "Packed fiber glass reaction vessel," to Beaver; and in U.S. Patent Application Publication No. 2006/0216206, published September 28, 2006, entitled "Solid phase extraction pipette," to Hudson et al. A multi-fiber bundle can be formed by piercing a monolithic element (rod, tube, etc.) with multiple capillaries, for example. In another example, a multi-fiber bundle can be formed by shrink-wrapping plastic, metal, or metal oxides around fibers to form the bundle. Thus, multi-fiber inserts sometimes are referred to as multi-fiber bundles or arrays. The assembled insert (e.g., monolithic element and fibers) contains voids. The voids in certain embodiments are channels between the external surfaces of adjacent fibers. Fibers in an insert sometimes are oriented in a substantially uniform direction, and not randomly distributed. In other embodiments, fibers are randomly distributed in the insert. Fibers in an insert can be of any convenient dimensions for interacting with an analyte and for use with a pipettor. The diameter of fibers in an insert can be, for example, from about 0.01 micrometers to about 100 micrometers, and in certain embodiments, about 0.01, 0.05, 0.1, 0.5, 1, 5, 10, 50 or 100 micrometers. The length of each fiber in an insert can be, for example, 0.001 millimeter to about 100 millimeters, and in certain embodiments, about 0.001, 0.005, 0.01, 0.05, 0.1, 0.5, 1, 5, 10, 50 or 100 millimeters. A multi-fiber insert can have any suitable number of capillaries for liquid handling and analyte extraction, and can include without limitation, about 100, 200, 300, 400, 500, 600, 700, 800, 900, 1000, 1250, 1500, 1750, 2000, 2250, 2500, 2750, 3000, 3250, 3500, 3750, 4000, 4250, 4500, 4750, 5000, 6000, 7000, 8000, 9000 or 10,000 fibers.

An insert in certain embodiments, is a sintered bead insert. Sintered bead inserts can be manufactured, for example, by delivering free-flowing beads to a form (e.g., a cylindrical form having an open top), and heating the beads such that contact points between beads partially melt. The resulting insert then is removed from the form. Beads in the outer perimeter of such inserts sometimes melt or partially melt and form a continuous wall or sheath around the insert. Beads described herein that can melt or partially melt in a sintering process can be utilized, and in one embodiment, silica glass beads are utilized.

The insert, and in applicable embodiments the fibers of an insert, can be of any cross-sectional geometry (circular, oval, polygonal, (e.g., hexagon, octagon), and the like) such that the insert can be fitted within a pipette tip. The maximum diameter of an insert often is equal to or greater than the diameter of the fluid discharge void of a pipette tip, and the length of an insert generally is no longer than the vertical length of a pipette tip. In certain embodiments, the diameter of an insert cross section is about 0.01 to about 20 millimeters (e.g., about 0.01, 0.05, 0.10, 0.50, 1, 2, 3, 4, 5, 6, 7, 8, 9, 10, 11, 12, 13, 14, 15, 16, 17, 18, 19 or 20 millimeter diameter), and in some embodiments the length of an insert is about 0.1 to about 100 millimeters (e.g., 0.1, 0.5, 1, 2, 3, 4, 5, 6, 7, 8, 9, 10, 15, 20, 30, 40, 50, 60, 70, 80, 90 or 100 millimeter length). In inserts arranged using regularly aligned fibers, the cross section shape of the insert can depend on the cross section shape of each fiber and on the number of fibers utilized to manufacture the insert. For example, if a rod or tube with a circular cross-section is used, the resultant fiber bundle can approximate the same circular cross-sectional shape. Thus, inserts formed using monolithic elements sometimes assume the cross-sectional shape of the monolithic element used as the boundary. In embodiments where a greater number of cylindrical fibers are utilized, the cross section of the insert sometimes is polygonal. Also, the smaller the diameter of the fibers used, the closer the cross-sectional shape can be the true cross-sectional shape of the boundary monolithic element. In the case of larger diameter fibers, the cross-sectional shape of the insert sometimes is circular due to the boundary, however, the perimeter of the fibers inside the circular boundary assume a shape closer to a multi-sided polygon. This feature is due to the packing density that can be achieved using boundary monolithic elements and fibers of varying sizes. A general rule of thumb is the smaller the fibers inserted into the monolithic element, the closer the insert cross-sectional shape will be to a circle. Alternative fiber cross sectional shapes can provide a greater packing density due to the "stacking" of the alternatively shaped fibers within the outer monolithic boundary element.

A solid phase or solid support (e.g., insert (e.g., fiber or sintered bead), bead) can comprise a material that can associate with an analyte. The solid phase may be coated (e.g., the surface of the solid phase may be coated) or charged with a material that associates with an analyte. The material may associate with an analyte by specific or non-specific interactions. Examples of non-specific interactions include without limitation hydrophobic (e.g., C18-containing solid support and tritylated solid support), electrostatic, ionic, van der Walls and polar (e.g., "wetting" association between nucleic acid/polyethylene glycol) interactions and the like. Examples of specific interactions include binding pair interactions, for example, such as affinity binding pair interactions. Examples of binding pair interactions include without limitation antibody/antigen, antibody/antibody, antibody/antibody fragment, antibody/antibody receptor, antibody/protein A or protein G, protein/ligand, hapten/anti-hapten, biotin/avidin, biotin/streptavidin, polyhistidine/bivalent metal (e.g., copper), glutathione/glutathione-S-transferase, folic acid/folate binding protein, vitamin B12/intrinsic factor, nucleic acid/complementary nucleic acid (e.g., DNA, RNA, PNA) interactions and the like. Antibodies include without limitation IgG, IgM, IgA, IgE, or an isotype thereof (e.g., IgG₁, IgG₂ₐ, IgG_{2b} or IgG₃). Other materials include without limitation carbohydrates, lipids, glycosylated proteins or polypeptides, aromatic hydrocarbons, and the like. A solid phase also may include a material that covalently links to an analyte. Non-limiting examples of molecules that can covalently link to analytes of interest include chemical reactive group/complementary chemical reactive group pairs (e.g., sulfhydryl/maleimide, sulfhydryl/haloacetyl derivative, amine/isotriocyanate, amine/succinimidyl ester, and amine/sulfonyl halides), and the like. Examples of specific and non-specific association agents affinity binding agents and methods for linking them to a solid phase are described in U.S. Patent Application publication no. 2007/0017870, published on January 25, 2007. A material in some embodiments renders uniform or substantially uniform any capillary channels between adjacent fibers in certain multi-fiber structures (e.g., aliphatic, aromatic, organoelement and inorganic moieties described in U.S. Patent No. 7,166,212, issued January 23, 2007, entitled "Multicapillary column for chromatography and sample preparation," to Belov et al.). In some embodiments, the insert is coated with beads that can associate with an analyte of interest, such as silica beads. In certain embodiments, a solid phase is coated with one or more materials (e.g., a material that renders the inner diameter of capillaries substantially uniform and a material that specifically or non-specifically associates with an analyte). A solid phase in certain embodiments may be naked and not include a separate material that associates with an analyte (e.g., a glass or etched glass solid phase that associates with nucleic acid). Materials may be in association with a solid phase by covalent and/or non-covalent interactions.

The term "analyte" as used herein refers to an agent that can associate with a material or insert of a device described herein. An analyte may be one or more chemicals, organic molecules, inorganic molecules and the like, in certain embodiments. An analyte sometimes is from a biological sample, and can be a biomolecule or biological reagent. A biological sample is any sample derived from an organism or environment, including without limitation, tissue, cells, a cell pellet, a cell extract, or a biopsy; a biological fluid such as urine, blood, saliva or amniotic fluid; exudate from a region of infection or inflammation; a mouth wash containing buccal cells; cerebral spinal fluid or synovial fluid; environmental, archeological, soil, water, agricultural sample; microorganism sample (e.g., bacterial, yeast, amoeba); organs; and the like. A biomolecule includes without limitation a cell, a group of cells, an isolated cell membrane, a cell membrane component (e.g., membrane lipid, membrane fatty acid, cholesterol, membrane protein), a saccharide, a polysaccharide, a nucleic acid (e.g., deoxyribonucleic acid (DNA), ribonucleic acid (RNA), protein nucleic acid (PNA)), a peptide and a polypeptide (e.g., a protein, a protein subunit, a protein domain) and the like. A sample sometimes is processed to liberate biomolecules of interest before a biomolecule is contacted with a device described herein. For example, cells can be lysed using methods well known in the art before the sample is contacted with a device herein.

Referring to Fig. 1A, in certain embodiments, a polymer pipette tip device 10 is provided that has a continuous and tapered polymer wall 12 defining a first void 14 and a second void 16 located at opposite termini, where the cross section of the first void and the cross section of the second void are substantially circular and substantially parallel, and the diameter of the first void is less than the diameter of the second void. Polymer pipette tip device 10 contains an insert 18 in contact with a portion of the inner surface of the polymer wall 12 between the first void 14 and second void 16, and where the insert 18 has voids and is constructed from a material that binds to a nucleic acid under nucleic acid binding conditions or insert 18 may alternatively contain a material that binds to a polypeptide under polypeptide binding conditions.

Referring to Fig. 1B, in certain embodiments, a polymer pipette tip device 20 is provided that has a continuous and tapered polymer wall 22 defining a first void 24 and a second void 26 located at opposite termini, where the cross section of the first void 24 and the cross section of the second void 26 are substantially circular and substantially parallel, and the diameter of the first void 24 is less than the diameter of the second void 26. Polymer pipette device 20 has annular protrusion 30, coextensive with the inner surface of the wall, and where the cross section of the annular protrusion is substantially parallel to the cross section of the first void and the second void. Fig. 1B shows an upper and lower annular protrusion, however it is envisioned that pipette tip device 20 can function equally well with one or more annular protrusions. The wall of pipette tip device 20 and the annular protrusion are constructed from the same polymer. Pipette tip device 20 contains insert 28 in contact with the annular protrusion 30, or in some embodiments more than one annular protrusion. Insert 28 of pipette tip device 20 has voids and is constructed from a material that binds to a nucleic acid under nucleic acid binding conditions or insert 28 may alternatively contain a material that binds to a polypeptide under polypeptide binding conditions.

Referring to Fig. 1C, in some embodiments, a polymer pipette tip device 32 is provided that has a continuous and tapered first wall 34 defining a first 36 void and a second void 38 located at opposite termini, wherein the cross section of the first void 36 and the cross section of the second void 38 are substantially circular and substantially parallel, and the diameter of the first void 36 is greater than the diameter of the second void 38. Polymer pipette tip device 32 also has a continuous and tapered second wall 40 defining the second void 38 and a third void 40 located at opposite termini, where the cross section of the second void 38 and the cross section of the third void 42 are substantially circular and substantially parallel, and the diameter of the second void 38 is greater than the diameter of the third void 42. The second wall 40 of pipette tip device 32 is coextensive with the first wall 34 and the first wall 34 and second wall 40 are constructed from the same polymer, and the taper angle of the second wall 40 is less than the taper angle of the first wall 34. Pipette tip device 32 also contains an insert 44 in contact with a portion of the inner surface of the second wall 40 between the second void 38 and the third void 42, where the insert comprises voids and where insert 44 has voids and is constructed from a material that binds to a nucleic acid under nucleic acid binding conditions or insert 44 may alternatively contain a material that binds to a polypeptide under polypeptide binding conditions.

Referring now to Fig. 1D, in certain embodiments, a polymer pipette device 46 is provided that has a continuous and tapered first wall 48 defining a first 50 void and a second void 52 located at opposite termini, where the cross section of the first void 50 and the cross section of the second void 52 are substantially circular and substantially parallel, and the diameter of the first void 50 is greater than the diameter of the second void 52. Polymer pipette tip device 46 also has a continuous and tapered second wall 54 defining the second void 52 and a third void 56 located at opposite termini, wherein the cross section of the second void 52 and the cross section of the third void 56 are substantially circular and substantially parallel, and the diameter of the second void 52 is greater than the diameter of the third void 56. The second wall 40 of pipette device 46 is coextensive with the first wall 48 and the first wall 48 and second wall 54 are constructed from the same polymer, and the taper angle of the second wall 54 is less than the taper angle of the first wall 48. Polymer pipette tip device 46 also has an annular protrusion 60, coextensive with the inner surface of the wall, where the cross section of the annular protrusion is substantially parallel to the cross section of the first void and the second void. Fig. 1B shows an upper and lower annular protrusion, however it is envisioned that pipette tip device 46 can function equally well with one or more annular protrusions 60. The wall of pipette tip device 46 and the annular protrusion(s) 60 are constructed from the same polymer. Pipette tip device 46 contains insert 58 in contact with the annular protrusion 60, or in some embodiments more than one annular protrusion. Insert 58 of pipette tip device 46 has voids and is constructed from a material that binds to a nucleic acid under nucleic acid binding conditions or insert 58 may alternatively contain a material that binds to a polypeptide under polypeptide binding conditions.

The cross-section of a void is defined as the shape the horizontal cross section of an opening assumed. For a pipette tip roughly circular in shape as defined by the wall of the pipette tip that forms the central axis or channel, a horizontal cross section of the void would be seen as substantially circular when viewed form the top. The cross section of the void is substantially parallel to the horizontal cross section of any other portion of the pipette tip that is not the void, although the diameters of the cross sections may be different.

The term "protrusion" as used herein refers to a bump or protruding material raised from the surface of the wall in a localized region. Such protrusions solve a problem in the art for retaining an insert in a pipette tip, and can retain an insert in a pipette tip by friction or compression in certain embodiments. A protrusion may be present in any one or a plurality of a variety of shapes, including without limitation, an annular protrusion or a dimple. An annular protrusion can be of any suitable cross section for retaining an insert in a pipette tip, including without limitation, a semispherical, semi-oval or v-shaped cross section. A dimple also may be of any suitable cross section for retaining an insert in a pipette tip, including without limitation a circular, oval, square, rectangular, rhomboid, hexagonal or octagonal cross section. The protrusion can be co-extensive with the wall in certain embodiments. For example, a co-extensive protrusion can be made from the same mold at the same time as the pipette tip, where there is no separation between the underlying and surrounding wall of the pipette tip and the protrusion. The protrusion may not be co-extensive with the wall in certain embodiments. In the latter embodiments, for example, an annular protrusion may be provided by an o-ring (e.g., a rubber or plastic o-ring). One or more annular protrusions may be present in a pipette tip, at any convenient location along the vertical axis of a pipette tip (i.e., the axis running from the larger pipette tip void to the smaller void) for retaining an insert. In certain embodiments, a pipette tip includes only one protrusion, which sometimes is located near the fluid discharge void of the pipette tip. In some embodiments, a pipette includes two protrusions, each contacting a terminus of the insert (i.e., the distance between the two protrusions along the vertical axis of the pipette tip is defined by the length of the insert in this example).

As used herein "second wall is coextensive with the first wall" refers to the first and second walls being of one piece, by being molded as one piece, being joined together to form a continuous wall without gaps or breaks, or by being co-extruded, for example. One of skill in the art will understand that other methods that result in two walls appearing and acting as a single wall can also be used, and are therefore included herein.

As used herein "first wall and second wall are constructed from the same polymer" refers to a process where the walls are formed as one continuous wall, by using molten polymer in a mold, or by being pressed or extruded as a single entity from polymer stock, for example.

As used herein "insert in contact with a portion of the inner surface of the second wall" refers to the insert being pressed into place, and often immobilized by frictional force or compression between the outer boundary of the insert and the inner surface of the pipette tip wall (as shown in Figs. 1C and 1D). The second wall, having a smaller angle from vertical compared to the first wall (i.e., a lower taper angle), facilitates a friction fit for the insert, and thus solves a problem in the art for retaining an insert in a pipette tip.

Referring to Figs. 1A and 1C, in some embodiments, inserts 18 and 44 are placed in polymer pipette tip devices 10 and 32 by compression fitting. That is, inserts 18 and 44 are pressed into place with sufficient force that the inserts cannot be easily dislodged due to the combination of compression, deformation of surfaces and co-efficient of friction being great enough to keep the insert in place. Alternatively, inserts 18 and 44 can also be held in place by adhesion to the inner polymer surface of the pipette tip using biologically and/or chemically inert adhesives, or by a combination of compression fitting and adhesives. Sufficient force is defined here as the minimal force required to fit an insert securely without causing damage to the pipette tip or the insert. It will be appreciated that application of heat to the pipette tips prior to fitment of the insert may be successfully used to further reduce the amount of force required to achieve a secure fit of the insert.

Referring to Figs. 1B and 1D, in certain embodiments, inserts 28 and 58 are placed in polymer pipette tip devices 20 and 46 by pressing inserts 28 and 58 past one or more annular rings 30 and 60 such that annular ring(s) 30 and 60 are slightly deformed around inserts 28 and 58, creating a seal. Fitment of inserts 28 and 58 in this manner would allow the use of smaller cross-sectional diameter inserts, while still allowing sealed, secure fitment. Additionally, the use of thinner annular ring(s) 30 and 60 would allow a certain amount of flexibility thus reducing the force required to fit an insert due to the ability of thinner annular rings to bend and deform and thus allow the formation of a secure seal with less required input pressure to seat the insert. It will be appreciated that application of heat to the pipette tips prior to fitment of the insert may be successfully used to further reduce the amount of force required to press the insert past the annular rings, achieving a securely sealed fit.

Referring to Figs. 1A, 1B, 1C, and 1D, in some embodiments presented above, the distal opening (first void 14 and 24 of Figs. 1A and 1B respectively, third void 42 and 56 of Figs. 1C and 1D, respectively) of polymer pipette tip device 10, 20, 32 and 46 can be configured to have different size and/or shaped openings 62 as illustrated in Fig. 1E, where two possible non-limiting examples out of many possible distal end configurations are presented.

Referring to Figs. 7A-7D (not necessarily drawn to scale), in certain embodiments, a polymer pipette tip device has a horizontal cross-sectional structure of fins, multi-fin inserts, multi-fin bundle or array oriented where the length of each of its fins runs substantially parallel to the longitudinal axis of the tip. The fins may be oriented in any suitable arrangement and Figs 7A-7D depict some embodiments. The fins may be oriented such that the length thereof runs substantially perpendicular, or at some other angle, to the longitudinal axis of the tube. The fins may also be aligned in a planar or substantially flat orientation with respect to one another. An exterior shell 71 may optionally surround the fins and be configured to have different thicknesses. The exterior shell may optionally provide support to the array of fins or may provide protection. The exterior shell may be of any convenient shape, such as one that fits into a pipette tip, for example. The exterior shell may be comprised of any material, such as a material suitable for the handling of analytes. For example, any convenient polymer or polymer mixture for fluid handling (e.g., polypropylene, polystyrene, polyethylene, polycarbonate) can be utilized, and other examples include, without limitation, silica gel, fused silica, glass (e.g. controlled-pore glass (CPG)), nylon, Sephadex®, Sepharose®, cellulose, a metal surface (e.g. steel, gold, silver, aluminum, silicon and copper), a magnetic material, a plastic material (e.g., polyethylene, polypropylene, polyamide, polyester, polyvinylidenedifluoride (PVDF)) and the like. In certain embodiments, the thickness of an exterior shell cross section is about 0.01 to about 1.0 millimeters (e.g., about 0.01, 0.02, 0.04, 0.06, 0.08, 0.10, 0.20, 0.30, 0.40, 0.50, 0.60, 0.70, 0.80, 0.90 or 1.0 millimeter thickness), and in some embodiments the thickness of the fin is about .001 to about 0.10 millimeters (e.g., 0.001, 0.002, 0.004, 0.006, 0.008, 0.010, 0.012, 0.014, 0.016, 0.018, 0.020, 0.04, 0.06, 0.080, or 0.10 millimeters thick). In some embodiments the length of the fin is about 1.0 to about 5.0 millimeters long (e.g. about 1.0, 1.5, 2.0, 2.5, 3.0, 3.5, 4.0, 4.5, or 5.0 millimeters long). In some embodiments the surface area of each fin is about 0.01 to about 5.0 square millimeters (e.g. about 0.01, 0.02, 0.04, 0.06, 0.08, 0.10, 0.20, 0.30, 0.40, 0.50, 0.60, 0.70, 0.80, 0.90, 1.0, 1.5, 2.0, 2.5, 3.0, 3.5, 4.0, 4.5, or 5.0 square millimeters). Depicted in Fig. 7A is an example of an array of parallel fins 73 aligned in a planar or substantially flat orientation with respect to one another. Fig. 7B depicts an example of fins in a radial arrangement. Fig. 7C depicts an example of fins in a checked arrangement and Fig. 7D depicts an example of fins in a sigmoidal "S-type" arrangement. Other embodiments may include concentric circles and/or a combination of one or more other arrangements.

The cross-sectional shape and area of the fins also may vary. Certain structural components, such as the surface area of the fins, may be increased or decreased to meet the desired dynamics of liquid flow through the pipette tip device. Orientation of the fins also may be modified for a desired flow. For example, orienting the fins with their lengths substantially parallel to the longitudinal axis of the pipette tip device may provide a greater path length for dynamic contact by an extracting solvent. A perpendicular orientation of one or more fins may aid in a filtering effect.

The fins may be secured within the pipette tip device by various methods. By way of example, an embodiment may have a circular cross-section and be arranged in a bundle or an array such that adjacent fins are in contact along their lengths. The circular cross-section of the fins may ensure that there will be spaces between adjacent fins for allowing passage of a liquid specimen and extracting solvent(s). The overall diameter of the array may be selected such that when inserted into the exterior shell, the array will be retained by spring forces exerted against the inner surface of the shell body. Alternatively, the periphery of the array may be caused to adhere to the inner surface of the exterior shell, such as by means of an adhesive or a coating that can be melted after insertion of the array. Notches, dimples, or similar other features also may be provided with the exterior shell in order to retain the array. Another embodiment may be to embed the fins in a matrix and subsequently bond the matrix or portions thereof, to the inner surface of the exterior shell. These are only a few examples of the different techniques that may be used to secure the fins within the pipette tip device and do not limit the scope of the present invention to the particular techniques that can be utilized.

The fins may be made from any material, e.g. plastic, glass, fused silica, suitable for preparing analyte samples. The materials used for constructing the fins may exhibit an attraction for liquid specimens in certain embodiments. The fin materials optionally may be selected so that liquid specimen is encouraged to spread across and cling to the surface of each, or a substantial number of, the fins in an array. The liquid specimen may spread across the array of fins by any means, for example by way of vacuum, wicking, surface tension, repulsive forces, capillary action and the like, for example.

Fins may be uncoated in some embodiments, and may be coated in certain embodiments. As mentioned above with regards to coating inserts, the surface of the fin material may also be coated or treated to enhance or selectively limit the movement of the liquid. For example, the fin material may be treated with one or more reagents that increase the surface tension of liquids. Another example may involve treating the fin materials to solvents that extract molecules from the liquid specimen.

### Polymer Pipette Tip Extension Device

As used herein "pipette tip extension device" refers to a particular embodiment which does not involve placing an insert into a pipette tip, but rather is a prefabricated polymer housing that contains an insert and a pipette tip adaptor at the topmost portion of the device, into which a pipette tip of the appropriate size is placed and secured in place by applying downward pressure to the pipette tip. "Polymer housing" refers to the plastic material used to contain the insert. The polymer housing can be of any convenient polymer or polymer mixture for fluid handling (e.g., polypropylene, polystyrene, polyethylene, polycarbonate). A pipette tip extension devices can be provided as a RNase, DNase, and/or protease free product, and can be provided with one or more filter barriers. Filter barriers are useful for preventing or reducing the likelihood of contamination arising from liquid handling, and sometimes are located near the pipette tip adaptor component in certain embodiments.

A pipette tip extension device includes a pipette tip adaptor component that can mate with a pipette tip fluid discharge end by a suitable connection, such as a friction, compression or lock fit, for example. The pipette tip adaptor component can include any suitable structure for mating the pipette tip, including without limitation, one or more barbs, protrusions (e.g., annular protrusions, described above), dimples (described above), o-rings, and luer lock structures. As used herein, "the diameter of the first void and a portion of the housing contiguous with the first void are adapted to fit over the fluid delivery terminus of a pipette tip" refers to the portions of and the manner in which the pipette tip and the pipette tip extension device are mated for the combinatorial device, and is illustrated in Figs. 2A and 2B. The diameter of the portion of the polymer housing contiguous with the first void sometimes is marginally larger than, sometimes the same as, and sometimes marginally smaller than the diameter of the pipette tip fluid emission end, and is configured such that once mated, the pipette tip and pipette tip extension device are not dislodged during pipetting of fluids. A user may dispose of the pipette tip - extender combination after use, or may remove the extender from the pipette tip after use, in certain embodiments.

An insert can be retained in a pipette tip extension device by any suitable retaining structure or method. Non-limiting examples of structures that retain an insert include, without limitation, one or more protrusions in contact with the inner surface of the pipette tip extension device wall (e.g., annular protrusions and dimples described above) one or more contiguous walls having different wall angles from vertical (e.g., described above). An insert also can be retained in an extension device by deforming a portion of a wall of the device in contact with the insert, including without limitation, heat (e.g., partially melting the wall) and mechanical crimping. A pipette tip extension device also may be configured without an insert, and include a combination of plugs and beads, or a combination of slots, plugs and beads, as described herein.

Referring to Fig. 2A, in some embodiments, a polymer pipette tip extension device 64 is provided that has a polymer housing 66 with an outer surface and inner surface that defines a first void 68 and a second void 70 located at opposite termini of the housing. The cross section of the first void 68 and the cross section of the second void 70 are substantially circular and substantially parallel, the diameter of the first void 68 is greater than the diameter of the second void 70, and the diameter of the first void 68 and a portion of the housing 66 contiguous with the first void 68 are adapted to fit over the fluid delivery terminus of a pipette tip 74. Polymer pipette tip extension device 64 contains an insert 72 in contact with a portion of the inner surface of the housing 66, where the insert 72 contains voids and where the insert 72 is constructed from a material that binds to a nucleic acid under nucleic acid binding conditions or insert 72 may alternatively contain a material that binds to a polypeptide under polypeptide binding conditions.

Referring to Fig. 2B, in some embodiments, a polymer pipette tip extension device 76 is provided that has a polymer housing 78 with an outer surface and inner surface that defines a first void 80 and a second void 82 located at opposite termini of the housing. The cross section of the first void 80 and the cross section of the second void 82 are substantially circular and substantially parallel and the diameter of the first void 80 is greater than the diameter of the second void 82. Pipette tip extension device 76 also contains annular protrusion 84, coextensive with the inner surface of the housing wall 78, and a portion of the housing 78 contiguous with the first void 68 are adapted to fit over the fluid delivery terminus of a pipette tip 86. Fig. 2B shows an upper and lower annular protrusion, however it is envisioned that pipette tip extension device 76 can function equally well with one or more annular protrusions. Polymer pipette tip extension device 76 contains insert 88 in contact with a portion of the inner surface of the housing 78, where the insert 88 contains voids and where the insert 88 is constructed from a material that binds to a nucleic acid under nucleic acid binding conditions or insert 88 may alternatively contain a material that binds to a polypeptide under polypeptide binding conditions.

Referring to Figs. 2A and 2B, in pipette tip extension devices 64 and 76 presented above, the fluid delivery terminus of the pipette tip 74 and 86 can be configured to have different size and/or shaped openings 90 as illustrated in Fig. 2C, where 2 possible non-limiting examples out of many possible fluid delivery termini configurations are presented.

The pipette tip extension devices 64 and 76 are attached to the pipette tip by contacting the pipette tip with the pipette tip device, and applying a downward pressure or force to the pipette to force the fluid dispensing portion of the pipette tip 74, 86 into the pipette tip extension device housing 64, 78 so that the fluid dispensing portion of the pipette tip 74, 86 makes contact with the inner wall of the pipette tip extension device. Optionally a twisting motion may be employed during the downward pressure to further help seat the fluid dispensing portion of the pipette tip 74, 86 in the pipette tip extension device. After mating the pipette tip to the pipette tip extension device, the combination may optionally be contacted with a fluid such that the pipette tip extension device voids 70 and 82 are placed in contact with the liquid.

Pipette tip extension devices 64 and 76 are adapted to fit the receiving pipette tip, by pressure fitting the pipette into the pipette tip extension device, in certain embodiments. This amounts to a compression fitting in which a sufficient amount of force is applied such that the pipette tip and the pipette tip extension device cannot be readily dislodged due to the combination of compression, deformation of surfaces and coefficient of friction being great enough to keep the pipette tip in contact with the pipette tip extension device. Sufficient force is defined here as the minimal force required to securely fit a pipette tip extension device to a pipette tip without causing damage to the pipette tip or the pipette tip extension device. Pipette tip extension device 76, containing annular protrusion will require greater force to fit the pipette tip due to the annular protrusions, but consequently will offer a more secure fitting, that will require greater force to remove, thereby ensuring that accidental removal by jarring or bumping is minimized. It is also envisioned that additional alternative methods of securing the pipette tip extension device, such as the use of a luer lock device, or bayonet type mounting devices are usable for secure fitting of the pipette tip extension device, and therefore are considered alternative means of securing the device in place.

### Pipette Tips and Pipette Tip Extension Devices Having Filters

Some pipette tips and pipette tip extension devices include one or more filter elements, the latter of which sometimes are referred to herein as "filter inserts." A filter insert sometimes is located at or near a pipette tip terminus that engages a dispensing device, and in some embodiments, the filter insert is the filter is located at or near the distal end of a pipette tip through which fluid is drawn and/or dispensed.

A filter insert sometimes is located at or near a pipette tip terminus that takes in and emits fluid. In the latter embodiments, filter inserts can trap or block entry of molecules other than an analyte of interest, referred to hereafter as "contaminants" (e.g., microbial wall material). The filter insert can be constructed from any material suitable for blocking or trapping contaminants, including, without limitation, polypropylene and the like. Pipette tips containing a filter insert at or near the fluid-emitting terminus sometimes contain no other insert element, and in certain embodiments, may contain another material that can interact with an analyte in the fluid not blocked and not trapped by the filter element. The other material can be in the form of a second insert in the pipette tip or extender, and can include a material described herein that can interact with an analyte, including, without limitation, beads (e.g., free or sintered), resins, fibers and the like.

Thus, provided herein is a pipette tip comprising a first terminal void and a second terminal void and a filter insert, where (i) the cross sectional area of the first terminal void is smaller than the cross sectional area of the second terminal void; (ii) the filter insert, or a portion thereof, is located in the pipette tip interior; and (iii) the terminus of the filter insert closest to the first terminal void is located at substantially the same location as the first terminal void, or is near the first terminal void. In certain embodiments the terminus of the filter insert closest to the first terminal void is within about 0 to about 5 millimeters of the first terminal void. The terminus of the filter insert is located outside the pipette tip in certain embodiments, and sometimes the filter insert in its entirety, including the terminus of the filter insert closest to the first terminal void, is located in the pipette tip interior. In some embodiments the pipette tip further comprises another material or second insert, such as a material or an insert described herein that interacts with an analyte, located in the pipette tip interior closer to the second terminal void than the filter insert. In certain embodiments, the second insert comprises beads and/or fibers. In some embodiments, a material that interacts with an analyte can be in effective contact with one or more barriers, including without limitation, a filter or a frit. Thus, a pipette tip or extender may include two or more filters in certain embodiments (e.g., a filter located at the distal end of a pipette tip, a resin that interacts with an analyte packed against the filter, and a frit packed against the opposite side of the resin; a filter located at the distal end of a pipette tip, and a resin packed between two frits or two other filters).

In some embodiments, a filter may be constructed from beads, fibers, a matrix or an array of material, a solid or semi-solid plug, or a combination thereof. In certain embodiments a filter may be constructed from polyester, cork, plastic, silica, gels, or a combination thereof. In some embodiments a filter may be porous, non-porous, hydrophobic, hydrophilic or a combination thereof. In some embodiments, a filter and inner surface of a pipette tip or extender may interstitially define a number of vertically-oriented pores. A filter may seal against the inner surface of a pipettor in some embodiments, where a filter is located near the pipettor insertion end of a pipette tip or extender. The pores may be distributed according to a pore distribution which defines varying pore sizes within the filter that are dependent upon the volume defined by the inner surface of the pipette tip and the cross-sectional horizontal density of the filter material. The pore size of a filter may be of any size that aids in the function of the filter. In some embodiments, a filter may have a maximum pore size be ten micrometers or less or three micrometers or less. In certain embodiments, a filter may have a pore size of about 10, 9, 8, 7, 6, 5, 4, 3, 2, 1, 0.5, or 0.05 micrometers.

Also provided are methods for using such tips. In certain embodiments, a pipette tip or extender comprising a filter element located at or near the fluid-emitting void of a pipette tip is first utilized to trap contaminants in a fluid containing an analyte of interest, and then a second pipette tip or extender, containing a second insert in its interior that can interact with the analyte, is contacted with the fluid under conditions in which the analyte interacts with the second insert. In such embodiments, fluid containing the analyte is contacted with the second insert in the second pipette tip or extender. The filter insert often is located closer to the fluid-emitting void in the second pipette tip than the second insert. The analyte then can be eluted from the second insert. In some embodiments, the second pipette tip or extender also includes a filter insert located closer to the fluid-emitting void than the second insert. In certain embodiments, a fluid containing an analyte is contacted with a pipette tip comprising a filter insert and a second insert that can interact with the analyte without first trapping contaminants with a pipette tip containing only a filter insert located near the fluid-emitting void.

### Laboratory Liquid Handling Tube and Container Devices

Many laboratory or clinical procedures require collecting, manipulating, preparing, or fractionating samples in tubes or containers of differing sizes. Microcentrifuge tubes (e.g., EPPENDORF tubes) often are utilized due to their availability in convenient sizes (250 microliter tubes, 500 microliter tubes, 1.5 milliliter tubes and 2 milliliter tubes), their sturdy design (capable of withstanding centrifugation, heating, cooling to temperatures below -70 degrees C, resistance to many solvents and chemicals) and availability as RNase and DNase free products with low liquid retention. These tubes also are available in configurations which have a locking lid affixed to the tube body by a hinge co-extensive from the tube body, or with a standard screw cap top. The tubes also are available in various colors and with specialized surfaces on the outside of the tube for labeling. While these tubes have gained acceptance and use as a preferred laboratory liquid handling tube, the usefulness of these tubes can be limited to volumes of 2 milliliters or less. Many laboratories and medical clinics also have a requirement for collecting, storing and/or processing samples greater than 2 milliliters in size or samples that may contain solids. In these instances specimen containers are used. Specimen containers are typically made from the same materials used for microcentrifuge tubes and so have many of the same advantageous properties. Typically these tubes have either a screw cap top, or a lid that that snaps securely in place to the body of the specimen container to provide a leak resistant or leak proof seal. The lids can be made of the same or a different material as the body. The specimen containers can have a tapered body or a non-tapered body. They have the additional added benefit of being able to handle liquid, solid or a combination of liquid and solid samples of larger sizes. Specimen containers (also sometimes referred to as specimen cups) are also available in a variety of sizes (about 15 milliliters, 20 milliliters, 4 ounces (about 125 milliliters), 4.5 ounces, 5 ounces, 7 ounces, 8 ounces (about 250 milliliters) and 9 ounces), allowing collection, storage, and/or processing of samples of over 300 milliliters. One of skill in the art understands that new products which perform the equivalent function and products of differing sizes are developed continuously. Therefore one of skill in the art will understand that containers not listed herein, but equivalent in function and of possibly different sizes are envisioned as being equivalent and therefore usable in the embodiments described herein. Laboratory liquid handling tubes and specimen containers may be utilized to contain a biological sample (e.g., urine, semen, blood, plasma, sputum, feces, mucous, vaginal fluid, spinal fluid, brain fluid, tears cells and the like).

Laboratory liquid handling tubes and specimen containers are manufactured from a variety of materials. Common materials used for the manufacture of these types of tubes and containers are polypropylene, polyethylene, and polycarbonate. Other thermoplastics or polymers may also be used. Many of the commercially available tubes and containers come pre-sterilized or with guarantees of being RNase, DNase, and protease free. For the purpose of these embodiments, any material that has good chemical or solvent resistance, has low liquid retention (i.e., made of hydrophobic materials or coated to be hydrophobic), is safe for the handling of analytes (RNase, DNase, and protease free), and that can withstand heating and extreme cooling is suitable for use.

A limitation of standard laboratory liquid handling tubes and specimen containers is that neither type of container reduces the number of steps required to isolate, purify, concentrate and/or fractionate analytes. One example would be preparation of protein or nucleic acid from a cell lysate. Regardless of the size of the sample, multiple tubes and processing steps are required to arrive at the final protein or nucleic acid material desired. This involves transferring the sample between different tubes or containers after each step or series of steps. Each transfer potentially loses sample or potentially introduces a contaminant that can alter recovery or destroy the samples completely. Thus, the present devices can reduce the number of steps and transfers required to arrive at a final analyte of interest, and thus save time, money and reduce sample loss.

Referring now to Figs. 3A and 4A, certain embodiments provide laboratory liquid handling tube device 92 and laboratory specimen container device 110. Laboratory liquid handling tube device 92 and laboratory specimen container device 110 have a body 94, 112 and a lid 96, 114. Laboratory liquid handling tube device 92 and laboratory specimen container device 110 also contains an insert 98, 116 affixed to an inner surface of the body, wherein the insert 98, 116 comprises voids and wherein the insert 98, 116 is constructed from a material that binds to a nucleic acid under nucleic acid binding conditions or insert 98, 116 may alternatively contain a material that binds to a polypeptide under polypeptide binding conditions.

Referring to Figs. 3B and 4B, some embodiments provide laboratory liquid handling tube device 100 and laboratory specimen container device 118. Laboratory liquid handling tube device 100 and laboratory specimen container device 118 have a body 102, 120 and a lid 104, 122. Laboratory liquid handling tube device 100 and laboratory specimen container device 118 also contains an insert 106, 124 affixed to an inner surface of the lid 104, 122, wherein the insert 106, 124 comprises voids and wherein the insert 106, 124 is constructed from a material that binds to a nucleic acid under nucleic acid binding conditions or insert 106, 124 may alternatively contain a material that binds to a polypeptide under polypeptide binding conditions.

Referring now to Figs. 3A, 3B, 4A, and 4B, one of skill in the art will appreciate that each of the embodiments illustrated in these figures represent similar devices with differences being found in the configuration of the lids and attachment points of the inserts. Referring now to Figs. 3A and 3B. In Fig. 3A and 3B, lid 96, 104 are affixed to the body of the embodiment by a hinge-like attachment co-extensive with both the body 94, 102 and lid 96, 104 of laboratory liquid handling tube 92, 100. In Fig 4A and 4B, lid 114 and 122 are of a screw cap or snap cap configuration and are therefore separate and distinct from the body of the embodiment. It should also be noted that the cap and lid in this arrangement may also be made from different materials. It will be appreciated by one of skill in the art that all shapes, sizes and lid configurations of microcentrifuge tubes or specimen containers can be utilized in manufacture of the laboratory liquid handling tube device or specimen container device embodiments presented herein.

As used herein, "insert affixed" refers to the manner in which the insert is permanently affixed to the body or lid of the liquid handling tube or container. One method of affixing the insert is to add an additional amount of polymer material to the base of the inside of the tube or to the inside of the lid, followed by heating or partially melting the additionally added material and placing the insert into the heated or partially melted polymer material. Alternative methods would be to use a chemically and/or biologically inert adhesive to affix the insert to either the lid or the base of the inside of the tube or container, or the use of plasma.

The laboratory liquid handling tube or container devices can be used in a variety of manners. In the case of whole cells or intact tissue, the tubes can be used to perform cell lysis followed by the isolation, purification, concentration and/or fractionation of an analyte of interest in a single step. Cell lysis procedures and reagents are commonly known in the art and may generally be performed by chemical, physical, or electrolytic lysis methods. For example, chemical methods generally employ lysing agents to disrupt the cells and extract the nucleic acids from the cells, followed by treatment with chaotropic salts. Physical methods such as freeze/thaw followed by grinding, the use of cell presses and the like are also useful if intact proteins are desired. High salt lysis procedures are also commonly used. These procedures can be found in Current Protocols in Molecular Biology, John Wiley & Sons, N.Y., 6.3.1-6.3.6 (1989), incorporated herein in its entirety. Following cell lysis using methods not requiring high salt, the analyte of interest can be directly eluted from the insert. For high salt lysis, it may be necessary to dilute the sample into a larger volume to affect binding of the analyte of interest, prior to sample isolation. Alternatively, increasing salt concentration may be required to elute the analyte of interest from the insert. Once the appropriate volume and salt concentration of sample are achieved, the tubes or containers can be gently agitated to ensure maximal binding, followed by elution in a minimal volume of elution buffer. The concentrations and volumes of buffers will be dependent on the species of molecule of interest and the volume of starting material on which lysis was performed.

### Microfluidic Devices

Microfluidic devices of increasing sophistication and ability have been developed and are commercially available. Advances in semiconductor manufacturing and nanotechnology have been translated to the fabrication of micromechanical structures such as micropumps, microvalves, and microelectrophoretic systems. U.S. Patent 6,168,948 to Andersen et al. or U.S. Patent 6,638,482 to Ackley et al. are examples of microfluidic devices that include miniature chambers and flow passages. Due to the increasing sophistication of these microfluid devices, it is now possible to take whole cells and process them for the purpose of isolating various analytes of interest completely within these miniature devices. Combining microfluidic devices with the inserts described herein allow further advances in the in-device purification and fractionation of analytes. Additionally, with inserts of the proper specificity, specific polypeptides or gene sequences, as well as protein/protein, protein/DNA, and/or RNA/DNA complexes may be isolated. In certain microfluidic devices, more than one insert may be used simultaneously to allow concurrent fractionation of multiple, and different, analytes of interest.

Provided herein is a microfluidic device having more than one insert specific for a particular species of analyte (e.g., protein, DNA, RNA, lipids, carbohydrates, or specific polypeptides or proteins or gene sequences depending on the manner in which the solid phase support is prepared), such that multiple independent isolation, purification, concentration and/or fractionation procedures can be carried out at the same time in the same microfluidic device.

Referring now to Fig. 5, a microfluidic device 128 is provided. Microfluidic device 128 has within housing 130 micromechanical structures capable of performing various biological procedures (cell lysis, extractions, microelectrophoresis, and the like) as well as a capillary flow channel 132. Capillary flow channel 132 will transport fluid containing either cells or various analytes, depending on the procedures that have already been performed. Microfluidic device 128 also contains at least one insert 134 in fluid communication with capillary flow 132, such that the liquid flowing through capillary channel 132 passes through the one or more inserts 134. Insert(s) 134 are placed within the capillary flow channel in a manner that allows easy access and removal for sample isolation and insert replacement. Insert 134 of microfluidic device 128 contains voids and is constructed from a material that binds to a nucleic acid under nucleic acid binding conditions or insert 134 may alternatively contain a material that binds to a polypeptide under polypeptide binding conditions.

It will be appreciated that in a microfluidic device configured as a miniature bioreactor, that continuous isolation of molecules of interest can be performed by removing inserts, configured for specific molecule or sequence isolation, that have been in fluid communication with the capillary channel and replacing them with identically configured inserts. The insert just removed can be processed to release the desired molecule, and then the entire insert can be reused (if removal of the desired molecule doesn't alter the binding specificity of the insert), while processing the molecules isolated on a different insert. Additionally, an even more powerful fractionation scheme can be envisioned where separate and distinct molecules are isolated simultaneously by the use of appropriately configured inserts.

The embodiments presented above create novel tools for the rapid, efficient processing of biological samples with reduced sample transfer and sample loss due to transfer or possible contamination. The polymer pipette tip device embodiments presented above can be assembled in pipette tips of any size, thus allowing the user to optimize sample recovery based on need and starting analyte. Furthermore inserts that bind nucleic acid or protein can also be made in different sizes and configurations.

### Devices Containing Beads

In addition to the inserts described in the embodiments above, devices can also be manufactured using beads that can associate with an analyte under certain conditions. Such devices include, without limitation, pipette tips, pipette tip extentions (e.g., extenders), tubes (e.g., centrifuge tubes) and plates (e.g., wells in a plate). Instead of manufacturing fiber or sintered bead inserts for insertion into a pipette tip, beads can be loaded into pipette tips or pipette tip extension devices in combination with structures that retain the beads in a fixed position within the device, in some embodiments.

The term "bead" or "beads" as used herein refers to particles and other like solid supports suitable for associating with analytes. Beads may have a regular (e.g., spheroid, ovoid) or irregular shape (e.g., rough, jagged), and sometimes are non-spherical (e.g., angular, multi-sided). Beads are porous in certain embodiments, and may be non-porous in certain applications. Beads having a diameter (e.g., nominal, average, mean or maximum diameter) greater than the minimum opening of a retention structure generally are utilized. Beads having a nominal, average or mean diameter of about 1 nanometer to about 500 micrometers can be utilized, such as those having a nominal, mean or average diameter, for example, of about 10 nanometers to about 100 micrometers; about 100 nanometers to about 100 micrometers; about 1 micrometer to about 100 micrometers; about 10 micrometers to about 50 micrometers; about 1, 5, 10, 15, 20, 25, 30, 35, 40, 45, 50, 55, 60, 65, 70, 75, 80, 85, 90, 95, 100, 200, 300, 400, 500, 600, 700, 800 or 900 nanometers; or about 1, 5, 10, 15, 20, 25, 30, 35, 40, 45, 50, 55, 60, 65, 70, 75, 80, 85, 90, 95, 100, 200, 300, 400, 500 micrometers.

A bead can be manufactured from a variety of insoluble or solid materials known to the person of ordinary skill in the art. For example, the bead can comprise or consist essentially of silica gel, glass (e.g. controlled-pore glass (CPG)), nylon, Sephadex®, Sepharose®, cellulose, a metal surface (e.g. steel, gold, silver, aluminum, silicon and copper), a magnetic material, a plastic material (e.g., polyethylene, polypropylene, polyamide, polyester, polyvinylidenedifluoride (PVDF)) and the like. Beads may be swellable (e.g., polymeric beads such as Wang resin) or non-swellable (e.g., CPG). Commercially available examples of beads include without limitation Wang resin, Merrifield resin and Dynabeads®. Beads may also be made as solid particles or particles that contain internal voids. A pipette tip or pipette tip extension device may include one type of bead, or two or more types of beads, in certain embodiments.

The person of ordinary skill in the art is familiar with methods for loading beads into laboratory structures. Beads may be loaded into a pipette tip or pipette tip extender device by pouring free flowing beads into the device without application of a compression force, in some embodiments. In certain embodiments, beads are compressed (e.g., tamped) in the device after they are loaded. The person of ordinary skill in the art can select a suitable compression force for embodiments in which beads are compressed in the device after loading. In certain embodiments, a compression force is selected that retains appropriate fluid handling parameters and/or does not significantly alter bead structure.

Beads can be treated with materials that facilitate association with analytes. The person of ordinary skill in the art can readily select and employ such materials, which include materials described herein.

Beads often are retained in a pipette tip or pipette extension device by a retention structure. A "retention structure" as defined herein is a component or aperture in the device, or in connection with the device, that has a minimum aperture less than the nominal, average or mean diameter of the beads. Non-limiting examples of retention structures are structures having an aperture in the fluid emitting terminus of a pipette tip or pipette tip extension device having a diameter (e.g., nominal, average, mean or maximum diameter) or minimum length less than the bead diameter, in certain embodiments. In some embodiments, the structure is a slot (e.g., a slot aperture) located at the fluid emitting terminus. In certain embodiments, the structure contains multiple apertures (e.g., 2, 3, 4, 5, 6, 7, 8, 9, 10, 20, 30, 40, 50 or more apertures), such as an array of apertures in a grid, sieve or mesh (e.g., plastic, wire mesh; array of parallel slots), for example. In certain embodiments, the aperture-containing structure is located at the fluid emitting terminus of the pipette tip or pipette tip extension device. In the latter embodiments, the fluid emitting terminus of the device may be of any convenient shape, including but not limited to angled, sharp, piercing, elliptical, rounded, flat, multifaceted and the like (e.g., the aperture (e.g., slot) may be located in one or more faces or facets of the tip). In some embodiments, the aperture-containing structure is located in a structure separate from, and in sealing contact with (e.g., adhesive or friction fit contact), the pipette tip or pipette tip extension device (e.g., a basket containing a grid array of apertures in sealing connection with the fluid emitting end of a pipette tip device). Non-limiting examples of retention structures also include a plug having a mean, average, nominal or maximum pore diameter less than the bead diameter, in certain embodiments. The person of ordinary skill in the art can select plugs appropriate for retaining beads in a pipette tip or pipette tip extension device (e.g., U.S. Patent No. 5,851,491 to Moulton), and in certain embodiments, are manufactured from a fibrous material. A plug can be of any shape suitable for retaining beads in a pipette tip or pipette tip extension device, and in certain embodiments, a plug has vertical sides or tapered sides with respect to the top and/or bottom plug surfaces. A plug sometimes is compressed in the pipette tip or pipette tip extension device after it is loaded into the device by a force determined by the person of ordinary skill in the art. Plugs can be located along any portion of a device suitable for fluid operation of the device. In certain embodiments, a plug is located only in about the lower 70%, 60%, 50%, 40%, 30% or 20% of the length of a pipette tip or pipette tip extension device. In some embodiments for devices containing a plug above the beads, there is a void between the bottom surface of said plug and the top surface of the beads. In certain embodiments, the void is up to about 90% of the volume of the pipette tip or pipette tip extension device (e.g., the void is about 5%, 10%, 15%, 20%, 25%, 30%, 35%, 40%, 45%, 50%, 55%, 60%, 65%, 70%, 75%, 80%, 85% or 90% of the pipette tip or pipette tip extension device volume). A pipette tip or pipette tip extension device includes, in certain embodiments, one or more protrusions (e.g., annular protrusions) that can facilitate retention of a plug in a particular location of the device. A pipette tip or pipette tip extension device can include one plug or two or more plugs, in certain embodiments.

Referring to Fig. 6A, in some unclaimed embodiments, a polymer pipette tip device 140 is provide that has a continuous and tapered polymer wall 142 defining a first void 144 and a second void 146 located at opposite termini, and where the cross section of the first void 144 and the cross section of the second void 146 are substantially circular and substantially parallel, and the diameter of the first void 144 is less than the diameter of the second void 146. Polymer pipette tip device 140 also contains a first plug 148 and a second plug 150, where the first plug 148 and second plug 150 are constructed from a water immiscible and porous material. Polymer pipette tip 140 contains beads 1152 coated within the interior of the pipette tip device 140 between the first plug 148 and the second plug 150, where the first plug 148 and second plug 150 are in contact with the inner surface of the wall 142 and contain the beads 152 within the pipette tip device 140, and where the beads are optionally constructed from a material that binds to a nucleic acid under nucleic acid binding conditions or may optionally contain a material that binds to a polypeptide under polypeptide binding conditions.

Referring to Fig. 6B, in some unclaimed embodiments polymer pipette tip device 154 is provided. Polymer pipette tip device 154 has a continuous and tapered first wall 156 defining a first void 158 and a second void 160 located at opposite termini, where the cross section of the first void 158 and the cross section of the second void 160 are substantially circular and substantially parallel, and the diameter of the first void 158 is greater than the diameter of the second void 160. Polymer pipette tip device 154 also has a continuous and tapered second wall 162 defining the second void 160 and a third void 164 located at opposite termini, where the cross section of the second void 160 and the cross section of the third void 164 are substantially circular and substantially parallel, and the diameter of the second void 160 is greater than the diameter of the third void 164, and where the second wall 162 is coextensive with the first wall 156 and the first wall 156 and second wall 162 are constructed from the same polymer, and where the taper angle of the second wall 162 is less than the taper angle of the first wall 156. Polymer pipette tip device 154 also contains a first plug 166 and a second plug 168, where the first plug 166 and second plug 168 are constructed from a water immiscible and porous material. Polymer pipette tip 154 also contains beads 170 located within the interior of the pipette tip device 154 between the first plug 166 and the second plug 168, wherein the first plug 166 and second plug 168 are in contact with the inner surface of the second wall 162 and contain the beads 170 within the pipette tip device 154, and where the beads 170 are optionally constructed from a material that binds to a nucleic acid under nucleic acid binding conditions or may optionally contain a material that binds to a polypeptide under polypeptide binding conditions.

Referring to Fig. 6C, in certain embodiments of the invention a polymer pipette tip device 172 is provided. Polymer pipette tip device 172 has a continuous and tapered polymer wall 174 defining a first void 176 and a second void 178 located at opposite termini, where the first void 176 is slot shaped and the cross section of the second void 178 is substantially circular. Polymer pipette tip device 172 also has a plug 180 constructed from a water immiscible and porous material. Polymer pipette tip device 172 also contains beads 182 located within the interior of the pipette tip device 172 between the first plug 180 and the slot wherein the plug 180 is in contact with the inner surface of the wall 174, and the slot width is less than the bead diameter, and the slot and the plug 180 contain the beads 182 within the pipette tip device 172, and wherein the beads 182 are optionally constructed from a material that binds to a nucleic acid under nucleic acid binding conditions or optionally comprises a material that binds to a polypeptide under polypeptide binding conditions.

Referring now to Fig. 6D, in some embodiments of the invention, a polymer pipette tip device 184 is provided. Polymer pipette tip device 184 has a continuous and tapered first wall 186 defining a first void 188 and a second void 190 located at opposite termini, where the cross section of the first void 188 and the cross section of the second void 190 are substantially circular and substantially parallel, and the diameter of the first void 188 is greater than the diameter of the second void 190. Polymer pipette tip device 184 also has a continuous and tapered second wall 192 defining the second void 190 and a third void 194 located at opposite termini where the third void 194 is slot shaped, and where the diameter of the second void 190 is greater than the diameter of the third void 194, and where the second wall 192 is coextensive with the first wall 186 and the first wall 186 and second wall 192 are constructed from the same polymer, and where the taper angle of the second wall 192 is less than the taper angle of the first wall 186. Polymer pipette tip device 184 also contains Polymer pipette tip device 172 also contains a plug 180 constructed from a water immiscible and porous material. Polymer pipette tip device 184 also contains beads 192 located within the interior of the pipette tip device 184 between the first plug 196 and the slot 194, wherein the plug 196 is in contact with the inner surface of the second wall 192, and the slot width is less than the bead diameter, and the slot 194 and the plug 196 contain the beads 192 within the pipette tip device 184, and wherein the beads 192 are optionally constructed from a material that binds to a nucleic acid under nucleic acid binding conditions or optionally comprises a material that binds to a polypeptide under polypeptide binding conditions.

Polymer pipette tip devices containing beads and two plugs described herein can be manufactured by, for example, inserting a first plug into a pipette tip to the desired position, filling the pipette tip with desired amount of beads, and inserting a second plug into the pipette tip. Optionally, an additional step of applying a slight downward pressure on the second plug can be added to aid in the compacting of the bead bed. In certain embodiments pertaining to polymer pipette tip devices containing beads, a single plug and a slot shaped fluid delivery terminus can be manufactured by, for example, filling the pipette tip with desired amount of beads, and inserting a plug into the pipette tip. Optionally, an additional step of applying a slight downward pressure on the plug can be added to aid in the compacting of the bead bed.

### Devices Comprising an Irregular Surface

Also provided herein are devices that include an irregular surface. The irregular surface often comprises (e.g., on and/or in the irregular surface) a material that can associate with an analyte, and the material that can associate with an analyte comprises beads in some embodiments. The material that can associate with an analyte is coated on the irregular surface in some embodiments, and not embedded or dispersed in the irregular surface, in some embodiments. The material sometimes is embedded in the irregular surface and not dispersed in the body that forms the irregular surface (e.g., partially embedded in the irregular surface (e.g., heating beads and partially melting them into the irregular surface of a pipette tip interior)). In some embodiments, a portion or all of a device, including the irregular surface, comprises dispersed material that associates with an analyte. In some embodiments, a device does not include an irregular surface, and includes a material that associates with an analyte (e.g., beads) that is (i) coated on a device surface, (ii) embedded in a surface of the device, (iii) dispersed in a device (e.g., dispersed in the polymer used to manufacture the device), or (iv) combinations of the foregoing. A device may be a pipette tip, a pipette tip extender (e.g., extension device), tube (e.g., centrifuge tube, specimen tube), or plate (e.g., one or more wells of a multiwell plate (e.g., 96, 384, 1536 well plate)). An irregular surface often is a surface or a portion of a surface that contacts fluid in the device (e.g., inner surface of a pipette tip or extender, surface of a well in a multiwell plate, inner surface of a centrifuge tube or specimen tube). A surface that comprises a material that associates with an analyte often is a surface or a portion of a surface that contacts fluid in the device (e.g., inner surface of a pipette tip or extender, surface of a well in a multiwell plate, inner surface of a centrifuge tube or specimen tube). Features of devices described elsewhere herein can be applicable to like devices with an irregular surface (e.g., a pipette tip having an inner surface that comprises an irregular surface also may comprise a filter).

An irregular surface of a device is not smooth, and can include one or more textures, including but not limited to, an etch, pore, pit, line, scratch, score, scrape, cut, carving and incision. A texture can be introduced to a surface of the device after the device is manufactured, in some embodiments, and in certain embodiments, a texture is on a surface of a mold member used to manufacture the device and the cast member imparts the texture to a surface of the device (e.g., a core pin for manufacturing the inner surface of a pipette tip comprising an irregular surface). A texture can be introduced by any procedure that introduces a texture to a metal or plastic device, including without limitation, acid etching and abrasive treatment processes (e.g., sand blast, tumbling a mold member with an abrasive). A texture can be irregular or substantially regular (e.g., regular lines, pits, scratches, or combination thereof), and can be of any suitable depth (e.g., a nominal, average or mean depth of about 0.1 nanometers to about 1 millimeter deep (e.g., a nominal, average or mean depth of about 0.001 micrometers, 0.01 micrometers, 0.1 micrometers, 1 micrometer, 10 micrometers or 100 micrometers)).

The material that can associate with the analyte is substantially dispersed regularly throughout a polymer mixture prior to manufacturing the device, in some embodiments. "Substantially dispersed regularly" as used herein refers to one unit of the polymer mixture having about the same concentration of the material as another unit of the polymer mixture, where the units are volumetric units or mass units, for example. The material that can associate with the analyte sometimes is substantially dispersed regularly throughout the device after the device is manufactured, and in certain embodiments, the material is disproportionately located at an irregular surface (e.g., about 25%, 30%, 35%, 40%, 45%, 50%, 55%, 60%, 65%, 70%, 75%, 80% or 85% of the material in the device is located at an irregular surface).

An irregular surface of a device generally exposes a portion of a material that associates with an analyte in a device. The irregular surface of a device can be the entire surface of a device or a portion of a surface of a device. Where the irregular surface is a portion of a surface of a device, the irregular surface sometimes is about 20% to about 80% of the surface of the device (e.g., about 25, 30, 35, 40, 45, 50, 55, 60, 65, 70 or 75% of the surface. In a device, one or more surfaces may comprise an irregular surface.

The polymer can be any polymer described herein (e.g., polypropylene), and a bead in a material can be any bead described herein (e.g., silica bead or gel, bead comprising a hydrophobic material, a bead comprising C-18 material). An analyte is a biomolecule, such as a nucleic acid, peptide, protein or cell, in some embodiments.

Provided also herein is a method for isolating an analyte, which comprises contacting a composition comprising the analyte with a device under analyte association conditions, where: (i) the device comprises an irregular surface that comprises a material that associates with the analyte, (ii) the irregular surface exposes the material that can associate with the analyte, and (iii) the analyte associates with the material. In some embodiments, the method comprises dissociating the analyte from the material, and in certain embodiments, the method comprises releasing the analyte from the device. The method sometimes comprises contacting the material with a solution that releases agents other than the analyte from the material (e.g., washing the material).

Also provided herein is a mold for manufacturing a device by an injection mold process, which comprises a body that forms an exterior portion of the device and a member that forms an inner surface of the device, where the member comprises an irregular surface that results in a portion of the inner surface that is irregular. In some embodiments, the member is a core pin for forming the inner surface of a pipette tip, or a member that forms a bottom surface of a well in a multiwell plate.

Provided also herein is a method for manufacturing a device having an inner surface and an exterior surface, which comprises: (a) injecting a liquid polymer mixture into a mold that comprises a body that forms the exterior surface of the device and a member that forms the inner surface of the device, (b) curing the device in the mold (e.g., partially curing or fully curing), and (c) ejecting the device from the mold, where the member comprises an irregular surface that results in a portion of the inner surface of the device that is irregular. The polymer mixture comprises a polymer and a material that can associate with an analyte in some embodiments.

In certain embodiments, shown in Fig. 8A is a pipette tip 80 having a proximal region 81 and proximal end 84 that can engage a fluid dispenser, and a distal region 82 (partial sectional view of the distal region is shown) and distal end 85. An inner surface of the pipette tip distal region 82 comprises an irregular surface 83. The wall thickness 85 of the distal region can comprise a material that can associate with an analyte, a portion of which can be exposed on irregular surface 83. In some embodiments, shown in Fig. 8B as a partial sectional view is a portion of a multiwell plate 90 having a top 91, a bottom 92 and wells 93, and a well bottom can comprise an irregular surface 94. The thickness 95 of a well bottom may comprise a material that can associate with an analyte, a portion of which can be exposed on irregular surface 94.

### Processing Analytes

The inserts and beads used in the devices described herein are useful for isolation, purification, concentration and/or fractionation of analytes, including without limitation peptides, polypeptides, proteins, nucleic acids and cells, and other analytes can also be isolated with the appropriately configured inserts and beads.

The terms "isolated", "isolating" or "isolation" as used herein refer to material removed from its original environment (e.g., the natural environment if it is naturally occurring, or a host cell if expressed exogenously), and thus is altered "by the hand of man" from its original environment. The terms "isolated", "isolating" or "isolation" and "purified", "purifying" or "purification" as used herein with reference to molecules does not refer to absolute purity. Rather, "purified", "purifying" or "purification" refers to a substance in a composition that contains fewer substance species in the same class (e.g., nucleic acid or protein species) other than the substance of interest in comparison to the sample from which it originated. "Purified", "purifying" or "purification", if a nucleic acid or protein for example, refers to a substance in a composition that contains fewer nucleic acid species or protein species other than the nucleic acid or protein of interest in comparison to the sample from which it originated. "Concentrated", "concentrating", or "concentration" refers to the act of increasing the "molarity" of a substance species (e.g., nucleic acid or protein species), without also substantially increasing the molarity of any salts, buffering agents or other chemicals present in the sample solution. "Fractionated", "fractionating" or "fractionation" as used herein refers to the act of separating similar or dissimilar substance species using a chromatographic approach, for example, fractionation of nucleic acids extracted from a cell, where the object of fractionation is to remove protein or RNA, but maintain DNA, and sometimes the total population of DNA. The DNA can be fractionated from other substance species, but the result is different from purification because there are not fewer substance species in the same class.

As used herein, the term "polypeptide" refers to a molecular chain of amino acids and does not refer to or infer a specific length of the amino acid chain. Thus peptides, oligopeptides, and proteins are included within the definition of polypeptide. This term is also intended to include polypeptides that have been subjected to post-expression modifications such as glycosylations, acetylations, phosphorylations, and the like. As used herein, the term "protein" refers to any molecular chain of amino acids that is capable of interacting structurally, enzymatically or otherwise with other proteins, polypeptides, RNA, DNA, or any other organic or inorganic molecule.

As used herein, "nucleic acid" refers to polynucleotides such as deoxyribonucleic acid (DNA) and ribonucleic acid (RNA). The term should also be understood to include, as equivalents, derivatives, variants and analogs of RNA or DNA made from nucleotide analogs, single (sense or antisense) and double-stranded polynucleotides. It is understood that the term "nucleic acid" does not refer to or infer a specific length of the polynucleotide chain, thus nucleotides, polynucleotides, and oligonucleotides are also included in the definition. Deoxyribonucleotides include deoxyadenosine, deoxycytidine, deoxyguanosine and deoxythymidine. For RNA, the uracil base is uridine. Different forms and types of nucleic acids can be contacted by devices described herein, including without limitation, genomic, plasmid, circular, linear, hairpin, ribozyme, antisense, triplex, short heteronuclear RNA (shRNA), short inhibitory RNA (siRNA) and inhibitory RNA (RNAi).

As used herein "material that binds to a nucleic acid" refers to any organic or inorganic molecules that can specifically or non-specifically bind to a nucleic acid. Included in the category "organic or inorganic molecule" are peptides, polypeptides, proteins, proteins subjected to post-translational modification, other nucleic acids, nucleic acids containing modified nucleotides, and antibodies. The material bound to nucleic acid sometimes is present in a sample from which the nucleic acid is being processed, such as cellular components that bind to nucleic acid.

As used herein, "analyte association conditions" refers to conditions under which an analyte associates with a bead or insert solid support. The term "associates" as used herein refers to covalent, non-covalent, specific and/or non-specific interactions between the analyte and a solid phase. The association often is reversible, in some embodiments is irreversible, and sometimes the association is a binding interaction. Analyte association conditions in some embodiments are specific temperatures and/or concentrations of certain components that facilitate association of an analyte to a bead or insert solid support, including without limitation, salt, buffer agent, carrier molecule and chaotrope concentration. As used herein, the term "wash" refers to exposing a solid support to conditions that remove materials from the solid support that are not the analyte(s) of interest. As used herein, the term "elute" refers to exposing a solid support to conditions that de-associate the analyte(s) of interest from the solid support.

In certain embodiments, a nucleic acid (e.g., DNA) is associated with a glass solid support (e.g., silica) in an insert or bead, and several association conditions are known in the art (e.g., World Wide Web URL biology-web.nmsu.edu/nish/Documents/reprints %20&%20supplemental/DNA%20Isolation%20Procedures.pdf). For example, it is known that DNA binds to silica under conditions of high ionic strength and/or high chaotrope concentration. High DNA adsorption efficiencies are shown to occur in the presence of a buffer solution having a pH at or below the pKa of the surface silanol groups.

Analyte binding conditions sometimes are categorized as being of low stringency or high stringency. Devices described herein can be utilized at elevated temperatures for use with stringent hybridization protocols. An example of stringent hybridization conditions is hybridization in 6X sodium chloride/sodium citrate (SSC) at about 45°C, followed by one or more washes in 0.2X SSC, 0.1% SDS at 50°C. Another example of stringent hybridization conditions are hybridization in 6X sodium chloride/sodium citrate (SSC) at about 45°C, followed by one or more washes in 0.2X SSC, 0.1% SDS at 55°C. A further example of stringent hybridization conditions is hybridization in 6X sodium chloride/sodium citrate (SSC) at about 45°C, followed by one or more washes in 0.2X SSC, 0.1% SDS at 60°C. Another stringent hybridization conditions are hybridization in 6X sodium chloride/sodium citrate (SSC) at about 45°C, followed by one or more washes in 0.2X SSC, 0.1% SDS at 65°C. Certain stringency conditions are 0.5M sodium phosphate, 7% SDS at 65°C, followed by one or more washes at 0.2X SSC, 1% SDS at 65°C.

Nucleic acid binding can also occur by other specific or nonspecific means. Non-limiting examples of nucleic acid binding conditions are high salt binding (high ionic conditions as in the case of non-specific interactions with glass) where DNA binding occurs in the range of 0.75M sodium chloride to 1.25M sodium chloride, followed by elution with concentrations of sodium chloride ranging from 1.25M to 1.6M; low salt binding (low ionic conditions as in the case for C18 coated solid supports) where non specific hydrophobic binding occurs in aqueous buffers with concentrations in the range of 0 to 0.1 Molar (M) salts, and where the bound nucleic acids can be eluted with increasing gradients of organic mobile phase, like acetonitrile, up to 30%, up to 40%, 50%, 60%, 70%, 80%, and even 90%, for example. The exact binding and elution conditions being dependent on the size and sequence of the nucleic acid. Further nucleic acid binding conditions available in the protocols of the following commercially available catalogs: PureLink quick plasmid miniprep kit (Invitrogen, Cat. No. K2100-10 or K2100-11), Wizard plus SV Minipreps DNA purification System (Promega, Cat. No. A1330 or A1460), QIAprep Spin Miniprep Kit (Qiagen, Cat. No. 27104 or 27106) and GenElute plasmid kids (Cat. No. PLN-50, PLN-70, PLN-250 and PLN-350).

A bind-wash-elute procedure can be utilized to process a nucleic acid from a sample using a device described herein. In certain embodiments, nucleic acids are adsorbed to a solid support comprising silica in the presence of one or more chaotropic agents, which remove water from hydrated molecules in solution. Examples of chaotropic agents include without limitation guanidinium salts (e.g., guanidinium hydrochloride and guanidium thiocyanate) and urea, and can be utilized at concentrations of 0.5M to 7M in certain embodiments. Polysaccharides and proteins do not adsorb to the solid support and are removed. After a wash step, nucleic acids are eluted under low- or no-salt conditions in small volumes, ready for immediate use without further concentration. Nucleic acid may first be isolated from a sample source (e.g., cells) by methods known to the person of ordinary skill in the art. For example, an alkaline lysis procedure may be utilized. The latter procedure traditionally incorporates the use of phenol-chloroform solutions, and an alternative phenol-chloroform-free procedure involving three solutions can be utilized. In the latter procedures, solution 1 can contain 15mM Tris, pH 8.0; 10mM EDTA and 100 ug/ml Rnase A; solution 2 can contain 0.2N NaOH and 1% SDS; and solution 3 can contain 3M KOAc, pH 5.5.

A bind-wash-elute procedure also can be utilized with insert and bead solid phases comprising silica derivatized with a positively charged moiety. In certain embodiments, a silica material having a high density of diethylaminoethyl (DEAE) groups can be used to isolate nucleic acids. Isolation is based on the interaction between negatively charged phosphates of the nucleic acid backbone and positively charged DEAE groups on the surface of the resin. Other charged groups can be utilized, including without limitation diethyl-(2-hydroxypropyl)aminoethyl, trimethylamine and the like. The salt concentration and pH conditions of the buffers used in each step control binding, wash stringency, and elution of nucleic acids. Combinations of pH conditions and buffers are described at World Wide Web address URL qiagen.com/Plasmid/AnionExchangeResin.aspx. For example, a salt concentration (e.g., NaCI) in the range of about 0.4M to about 2.0M may be used with a pH in the range of about 6.0 to about 9.0 for extraction of DNA or RNA, where a higher salt concentration is utilized with a lower pH solution.

As described previously, solid phases support can be functionalized with affinity-binding reagents, such as specific gene sequences, specific peptide sequences, antibodies and other organic or inorganic molecules. Conditions for associating analytes with such functionalized solid phases are known in the art. Conditions for washing and eluting analytes from such supports also are known in the art. For example, polypeptides can be eluted by increasing amounts of organic solvents, such as acetonitrile (e.g., about 30%, 40%, 50%, 60%, 70%, 80%, 90%). One of ordinary skill in the art will appreciate that the exact binding and elution conditions will be dependent on the size and sequence of the analyte of interest and the solid phase to which it is associated.

Analytes processed using devices described herein can be detected by a method known to the person of ordinary skill in the art. Methods for detecting polypeptides are well known (e.g., Coomassie blue, Bradford reagent) and methods for detecting nucleic acids also are known. For example, measuring the intensity of absorbance of a DNA solution at wavelengths 260 nm and 280nm is used as a measure of DNA purity. DNA absorbs ultraviolet (UV) light at 260 and 280 nm, and aromatic proteins absorbs UV light at 280 nm; a pure sample of DNA has the 260/280 ratio at 1.8 and is relatively free from protein contamination. A DNA preparation that is contaminated with protein will have a 260/280 ratio lower than 1.8. In another example, a DNA sample processed using a device described herein can be amplified using a technique known in the art, such as polymerase chain reaction (PCR) and transcription mediated amplification (TMA) processes, for example. Quantitative PCR (Q-PCR) processes are known in the art for determining the amount of a particular DNA sequence in a sample. Also, DNA can be quantified by cutting with a restriction enzyme, electrophoresing products in an agarose gel, staining with ethidium bromide or a different stain and comparing the intensity of the DNA with a DNA marker of known concentration. Nucleic acid also can be quantified by diphenylamine (DPA) indicators by spectrometric detection at 600 nm and use of a standard curve of known nucleic acid concentrations.

Modifications may be made to the foregoing without departing from the basic aspects of the invention. Although the invention has been described in substantial detail with reference to one or more specific embodiments, those of ordinary skill in the art will recognize that changes may be made to the embodiments specifically disclosed in this application, yet these modifications and improvements are within the scope of the invention as defined by the claims.

The invention illustratively described herein suitably may be practiced in the absence of any element(s) not specifically disclosed herein. Thus, for example, in each instance herein any of the terms "comprising," "consisting essentially of," and "consisting of" may be replaced with either of the other two terms. The terms and expressions which have been employed are used as terms of description and not of limitation, and use of such terms and expressions do not exclude any equivalents of the features shown and described or portions thereof, and various modifications are possible within the scope of the invention claimed. The term "a" or "an" can refer to one of or a plurality of the elements it modifies (e.g., "a reagent" can mean one or more reagents) unless it is contextually clear either one of the elements or more than one of the elements is described. The term "about" as used herein refers to a value within 10% of the underlying parameter (i.e., plus or minus 10%), and use of the term "about" at the beginning of a string of values modifies each of the values (i.e., "about 1, 2 and 3" is about 1, about 2 and about 3). For example, a weight of "about 100 grams" can include weights between 90 grams and 110 grams. Further, when a listing of values is described herein (e.g., about 50%, 60%, 70%, 80%, 85% or 86%) the listing includes all intermediate and fractional values thereof (e.g., 54%, 85.4%). Thus, it should be understood that although the present invention has been specifically disclosed by representative embodiments and optional features, modification and variation of the concepts herein disclosed may be resorted to by those skilled in the art, and such modifications and variations are considered within the scope of this invention.

## Claims

1. A polymer pipette tip device (172) which comprises:
a continuous and tapered polymer wall (174) defining a first void (176) and a second void (178) located at opposite termini, wherein the first void is slot shaped and the cross section of the second void is substantially circular;
a plug (180) constructed from a porous material; and beads (182) located within the interior of the pipette tip device between the plug and the slot, wherein the plug is in contact with the inner surface of the wall, the slot width is less than the bead diameter, the slot length is greater than the bead diameter, and the slot and the plug contain the beads within the pipette tip device, and wherein the beads interact with an analyte under analyte interaction conditions.

2. A polymer pipette tip (184) device which comprises:
a continuous and tapered first wall (186) defining a first void (188) and a second void (190) located at opposite termini, wherein the cross section of the first void and the cross section of the second void are substantially circular and substantially parallel, and the diameter of the first void is greater than the diameter of the second void;
a continuous and tapered second wall (192) defining the second void (190) and a third void (194) located at opposite termini, wherein the third void is slot shaped, wherein the second wall is coextensive with the first wall and the first wall and second wall are constructed from the same polymer, and wherein the taper angle of the second wall is less than the taper angle of the first wall;
a plug (196) constructed from a porous material; and
beads (198) located within the interior of the pipette tip device between the plug and the slot, wherein the plug is in contact with the inner surface of the first wall or second wall, the slot width is less than the bead diameter, the slot length is greater than the bead diameter, the slot and the plug contain the beads within the pipette tip device, and wherein the beads interact with an analyte under analyte interaction conditions.

3. The device (172; 184) of claims 1 or 2, wherein the slot (176; 194) is at the fluid delivery terminus.

4. The device (172; 184) of any one of claims 1 to 3, wherein the beads (182; 198) can reversibly interact with the analyte.

5. The device (172; 184) of any one of claims 1 to 4, wherein the beads (182; 198) can interact with a nucleic acid, peptide, polypeptide, biomolecule, biological agent or cell.

6. The device (172; 184) of any one of claims 1 to 5, wherein the beads (182; 198) are sintered, free beads, silica gel, glass (e.g. controlled-pore glass (CPG), silica beads), nylon, cellulose, a metal surface (e.g. steel, gold, silver, aluminum, silicon and copper), a magnetic material, a plastic material (e.g., polyethylene, polypropylene, polyamide, polyester, polyvinylidenedifluoride (PVDF)), Wang resin, or Merrifield resin.

7. A method for isolating an analyte, which comprises:
(a) contacting an analyte with a device of any one of claims 1 to 6 under conditions in which the analyte associates with the beads; and
(b) exposing the beads to conditions that elute the analyte from the insert.

8. The method of claim 7, which further comprises optionally exposing the beads to conditions that selectively remove any non-analyte components associated with the insert prior to (b).

9. The method of claim 7 or 8, wherein the analyte is a nucleic acid.

10. The method of claim 7 or 8, wherein the analyte is a polypeptide.

11. A method for manufacturing a polymer pipette tip device of any one of claims 1 to 6 which contains beads, a single plug and a slot-shaped fluid delivery terminus comprising:
filling the pipette tip with determined amount of beads, and
inserting a plug into the pipette tip, wherein the beads are located between the plug and the slot.

## Patentansprüche

1. Polymerpipettenspitzen-Vorrichtung (172), die aufweist:
eine durchgehende und sich verjüngende Polymerwand (174), die einen ersten Hohlraum (176) und einen zweiten Hohlraum (178) definiert, die an entgegengesetzten Endpunkten angeordnet sind, wobei der erste Hohlraum schlitzförmig ist und der Querschnitt des zweiten Hohlraums im Wesentlichen kreisförmig ist;
einem Stopfen (180), der aus einem porösen Material aufgebaut ist; und
Kügelchen (182), die sich im Inneren der Pipettenspitzen-Vorrichtung zwischen dem Stopfen und dem Schlitz befinden, wobei sich der Stopfen in Kontakt mit der Innenfläche der Wand befindet, die Schlitzbreite kleiner als der Kügelchendurchmesser ist, die Schlitzlänge größer als der Kügelchendurchmesser ist, und der Schlitz und der Stopfen die Kügelchen in der Pipettenspitzen-Vorrichtung zurückhalten, und wobei die Kügelchen mit einem Analyten unter Analytenwechselwirkungsbedingungen wechselwirken.

2. Polymerpipettenspitzen-Vorrichtung (184), die aufweist:
eine durchgehende und sich verjüngende erste Wand (186), die einen ersten Hohlraum (188) und einen zweiten Hohlraum (190) definiert, die an entgegengesetzten Endpunkten angeordnet sind, wobei der Querschnitt des ersten Hohlraums und der Querschnitt des zweiten Hohlraums im Wesentlichen kreisförmig und im Wesentlichen parallel sind, und der Durchmesser des ersten Hohlraums größer als der Durchmesser des zweiten Hohlraums ist;
eine durchgehende und sich verjüngende zweite Wand (192), die den zweiten Hohlraum (190) und einen dritten Hohlraum (194) definiert, die an entgegengesetzten Endpunkten angeordnet sind, wobei der dritte Hohlraum schlitzförmig ist, wobei die zweite Wand koextensiv mit der ersten Wand ist und die erste Wand und die zweite Wand aus demselben Polymer aufgebaut sind, und wobei der Verjüngungswinkel der zweiten Wand kleiner als der Verjüngungswinkel der ersten Wand ist;
einen Stopfen (196), der aus einem porösen Material aufgebaut ist; und
Kügelchen (198), die sich im Inneren der Pipettenspitzen-Vorrichtung zwischen dem Stopfen und dem Schlitz befinden, wobei sich der Stopfen in Kontakt mit der Innenfläche der ersten Wand oder der zweiten Wand befinden, die Schlitzbreite kleiner als der Kügelchendurchmesser ist, die Schlitzlänge größer als der Kügelchendurchmesser ist, der Schlitz und der Stopfen die Kügelchen in der Pipettenspitzen-Vorrichtung zurückhalten, und wobei die Kügelchen mit einem Analyten unter Analytenwechselwirkungsbedingungen wechselwirken.

3. Vorrichtung (172; 184) nach Anspruch 1 oder 2, wobei sich der Schlitz (176; 194) am Fluidabgabeendpunkt befindet.

4. Vorrichtung (172; 184) nach einem der Ansprüche 1 bis 3, wobei die Kügelchen (182; 198) reversibel mit dem Analyten wechselwirken können.

5. Vorrichtung (172; 184) nach einem der Ansprüche 1 bis 4, wobei die Kügelchen (182; 198) mit einer Nukleinsäure, einem Peptid, einem Polypeptid, einem Biomolekül, einem biologischen Agens oder einer Zelle wechselwirken können.

6. Vorrichtung (172; 184) nach einem der Ansprüche 1 bis 5, wobei die Kügelchen (182; 198) gesinterte, freie Kügelchen, Silikagel, Glas (z.B. Glas mit gesteuerten Poren (CPG), Silikakügelchen), Nylon, Zellulose, eine Metalloberfläche (z.B. Stahl, Gold, Silber, Aluminium, Silizium und Kupfer), ein magnetisches Material, einen Kunststoff (z.B. Polyethylen, Polypropylen, Polyamid, Polyester, Polyvinylidendifluorid (PVDF)), Wang-Harz oder Merrifield- Harz aufweisen.

7. Verfahren zum Isolieren eines Analyten, das aufweist:
(a) In-Kontakt-Bringen eines Analyten mit einer Vorrichtung nach einem der Ansprüche 1 bis 6 unter Bedingungen, unter denen sich der Analyt mit den Kügelchen verbindet; und
(b) einem Schritt, in dem die Kügelchen Bedingungen ausgesetzt werden, die den Analyten vom Einsatz eluieren.

8. Verfahren nach Anspruch 7, das ferner optional einen Schritt aufweist, in dem die Kügelchen Bedingungen ausgesetzt werden, die selektiv alle Nicht-Analytenkomponenten entfernen, die mit dem Einsatz vor dem Schritt (b) verbunden sind.

9. Verfahren nach Anspruch 7 oder 8, wobei der Analyt eine Nukleinsäure ist.

10. Verfahren nach Anspruch 7 oder 8, wobei der Analyt ein Polypeptid ist.

11. Verfahren zum Herstellen einer Polymerpipettenspitzen-Vorrichtung nach einem der Ansprüche 1 bis 6, die Kügelchen, einen einzigen Stopfen und einen schlitzförmigen Fluidabgabeendpunkt enthält, das aufweist:
Füllen der Pipettenspitze mit einer bestimmten Menge Kügelchen, und
Einsetzen eines Stopfens in die Pipettenspitze, wobei die Kügelchen zwischen dem Stopfen und dem Schlitz angeordnet sind.

## Revendications

1. Dispositif d'embout de pipette en matériau polymère (172), comprenant :
une paroi (174) polymère continue et fuselée définissant un premier vide (176) et un deuxième vide (178) situés à des extrémités opposées, le premier vide étant en forme de fente et la section transversale du deuxième vide étant sensiblement circulaire ;
un bouchon (180) en matériau poreux ; et
des billes (182) disposées à l'intérieur du dispositif d'embout de pipette entre le bouchon et la fente, le bouchon étant en contact avec la surface intérieure de la paroi, la largeur de fente étant inférieure au diamètre de bille, la longueur de fente étant supérieure au diamètre de bille, et la fente et le bouchon contenant les billes à l'intérieur du dispositif d'embout de pipette, et les billes interagissant avec un analyte dans des conditions d'interaction d'analyte.

2. Dispositif d'embout de pipette en matériau polymère (184), comprenant :
une première paroi (186) continue et fuselée définissant un premier vide (188) et un deuxième vide (190) situés à des extrémités opposées, la section transversale du premier vide et la section transversale du deuxième vide étant sensiblement circulaires et sensiblement parallèles, et le diamètre du premier vide étant supérieur au diamètre du deuxième vide ;
une deuxième paroi (192) continue et fuselée définissant le deuxième vide (190) et un troisième vide (194) situés à des extrémités opposées, le troisième vide étant en forme de fente, la deuxième paroi étant coextensive à la première paroi, et la première paroi et la deuxième paroi étant faites du même polymère, et l'angle d'effilement de la deuxième paroi étant inférieur à l'angle d'effilement de la première paroi ;
un bouchon (196) en matériau poreux ; et
des billes (198) disposées à l'intérieur du dispositif d'embout de pipette entre le bouchon et la fente, le bouchon étant en contact avec la surface intérieure de la première paroi ou de la deuxième paroi, la largeur de fente étant inférieure au diamètre de bille, la longueur de fente étant supérieure au diamètre de bille, la fente et le bouchon contenant les billes à l'intérieur du dispositif d'embout de pipette, et les billes interagissant avec un analyte dans des conditions d'interaction d'analyte.

3. Dispositif (172 ; 184) selon la revendication 1 ou la revendication 2, où la fente (176 ; 194) est située à l'extrémité de refoulement de fluide.

4. Dispositif (172 ; 184) selon l'une des revendications 1 à 3, où les billes (182 ; 198) peuvent interagir de manière réversible avec l'analyte.

5. Dispositif (172 ; 184) selon l'une des revendications 1 à 4, où les billes (182 ; 198) peuvent interagir avec un acide nucléique, un peptide, un polypeptide, une biomolécule, un agent biologique ou une cellule.

6. Dispositif (172 ; 184) selon l'une des revendications 1 à 5, où les billes (182 ; 198) sont frittées, des billes libres, en gel de silice, verre (tel que verre à porosité contrôlée (CPG), billes de silice), nylon, cellulose, à surface métallique (p. ex. acier, or, argent, aluminium, silicium et cuivre), en matériau magnétique, en matériau plastique (tel que polyéthylène, polypropylène, polyamide, polyester, difluorure de polyvinylidène (PVDF)), résine de Wang ou résine de Merrifield.

7. Procédé d'isolation d'un analyte, comprenant :
(a) la mise en contact d'un analyte avec un dispositif selon l'une des revendications 1 à 6 dans des conditions où l'analyte s'associe aux billes ; et
(b) l'exposition des billes à des conditions éluant l'analyte de l'insert.

8. Procédé selon la revendication 7, comprenant en outre l'exposition facultative des billes à des conditions supprimant sélectivement tous les composants autres que l'analyte associés à l'insert antérieurement à (b).

9. Procédé selon la revendication 7 ou la revendication 8, où l'analyte est un acide nucléique.

10. Procédé selon la revendication 7 ou la revendication 8, où l'analyte est un polypeptide.

11. Procédé de fabrication d'un dispositif d'embout de pipette en matériau polymère selon l'une des revendications 1 à 6 contenant des billes, un bouchon unique et une extrémité de refoulement de fluide en forme de fente, comprenant :
le versement d'une quantité définie de billes dans l'embout de pipette, et
l'insertion d'un bouchon dans l'embout de pipette, les billes étant disposées entre le bouchon et la fente.
